# EUROPEAN PATENT APPLICATION

(11) **EP 4 851 773 A1**
(43) Date of publication of application: **09.12.2026**
(21) Application number: 26175459.2
(22) Date of filing: 29.04.2026
(51) Int. Cl.: G06F 3/12

(54) **IMAGE PROCESSING SYSTEM, IMAGE PROCESSING PROGRAM, AND IMAGE PROCESSING METHOD**

(30) Priority: 03.06.2025 JP 2025092975
(71) Applicant: Brother Kogyo Kabushiki Kaisha, Nagoya-shi, Aichi 467-8561 (JP)
(72) Inventor: OKUNO, Tetsuya, Nagoya, 467-8562 (JP); INAYOSHI, Yuto, Nagoya, 467-8562 (JP); SHIBUYA, Miki, Nagoya, 467-8562 (JP)
(74) Representative: J A Kemp LLP

(57) **Abstract**

An image processing system includes: a setting part which sets an image processing apparatus as a transmission destination for an instruction to perform image processing from a user; an acceptance part which accepts an input, from the user, relating to the image processing with respect to the image processing apparatus set by the setting part; and a notification part which notifies a message based on a response obtained by a prompt generation part and an interface part, the prompt generation part being configured to generate a prompt in accordance with the input accepted by the acceptance part, the prompt relating to the image processing to be performed by the image processing apparatus set by the setting part, and the interface part being configured to input the prompt generated by the prompt generation part to an artificial intelligence system including a general-purpose generative AI, and to receive the response.

## Description

### TECHNICAL FIELD

The present disclosure relates to an image processing system, an image processing program, and an image processing method each of which is configured to process an image using an image processing apparatus.

### BACKGROUND ART

A known technique aims to notify a user of appropriate print settings, as described, for example, in Patent Literature 1. Patent Literature 1 discloses a system including an obtainment unit, an estimation unit, and a notification unit. The obtainment unit obtains information relating to print settings. The estimation unit estimates a recommended value with respect to the obtained information relating to the print settings using a trained model. The notification unit notifies the user of the difference between the obtained information relating to the print settings and the estimated recommended value.

### Citation list

### [Patent Literature]

Patent Literature 1: Japanese Patent Application Laid-Open No. JP2021-089660A

### SUMMARY

### Problem to be solved by the invention:

In the technique of Patent Literature 1, generation of such a trained model for estimating the recommended involves considerable time and effort.

An object of the present disclosure is to provide a technique capable of notifying a user of appropriate settings relating to image processing, without generating any learned model in an image processing system, an image processing program, and an image processing method.

### Solution to the problem:

An image processing system relating to an aspect of the present disclosure includes:
a setting part configured to set an image processing apparatus as a transmission destination for an instruction to perform image processing from a user;
an acceptance part configured to accept an input from the user, the input relating to the image processing with respect to the image processing apparatus set by the setting part; and
a notification part configured to notify a message based on a response which is obtained by a prompt generation part and an interface part, the prompt generation part being configured to generate a prompt in accordance with the input accepted by the acceptance part, the prompt relating to the image processing to be performed by the image processing apparatus set by the setting part, the interface part being configured to input the prompt generated by the prompt generation part to an artificial intelligence system including a general-purpose generative AI, and to receive the response.

The image processing system relating to the present disclosure includes the setting part, the acceptance part, and the notification part. The setting part sets the image processing apparatus as the transmission destination for the instruction to perform the image processing from the user. The acceptance part accepts the input from the user, the input relating to the image processing with respect to the image processing apparatus set by the setting part. The notification part notifies the message based on the response which is obtained in a process performed by the interface part and a process performed by the prompt generation part. The prompt generation part generates a prompt in accordance with the input accepted by the acceptance part, the prompt relating to the image processing to be performed by the image processing apparatus set by the setting part. The interface part inputs the prompt generated by the prompt generation part to the artificial intelligence system including the general-purpose generative AI, and to receive the response.

In the present disclosure, the system uses the artificial intelligence system, including the general-purpose generative AI, to notify the user of the message relating to the image processing apparatus. Therefore, the system is capable of notifying the user of the appropriate settings relating to the image processing apparatus via the message, without generating any learned model.

### Effect of the invention:

According to the present disclosure, the user can be notified of the appropriate settings relating to the image processing, without generating any trained model.

### BRIEF DESCRIPTION OF DRAWINGS

FIG. 1 is a diagram illustrating an example of a configuration of an image processing system according to an embodiment.
FIG. 2 is a diagram illustrating an example of a functional configuration of a service server.
FIG. 3 is a diagram illustrating an example of a hardware configuration of a controller and an artificial intelligence system.
FIG. 4 is a diagram illustrating an example of a hardware configuration of a printer.
FIG. 5 is a diagram illustrating an example of a hardware configuration of a terminal device.
FIGs. 6A and 6B are a sequence diagram representing a process performed by each of the terminal device, the controller, the artificial intelligence system, and the printer.
FIG. 7 is a sequence diagram in which a process performed by the controller and the artificial intelligence system, in response to the controller outputting prompts of a plurality of prompt types to the artificial intelligence system in stages, is extracted and illustrated.
FIG. 8 is a diagram illustrating a print image in a case where a print image is an image of a My Number Card (a government-issued identification card in Japan that includes a unique personal identification number assigned to an individual).
FIG. 9 is a diagram representing a print image in a case where the print image is an image to be printed on a uchiwa (a Japanese cheering fan having a display surface on which information for cheering a particular performer is displayed).
FIG. 10 is a diagram illustrating an example of a screen in a case where the print image is a spreadsheet and an object spans a plurality of pages.
FIG. 11 is a diagram illustrating an example of a screen in a case where the print image is a My Number Card and the My Number Card is set to be printed at a size larger than the actual size of the My Number Card.
FIG. 12 is a diagram illustrating an example of a screen in a case where the print image is a My Number Card and the print image includes unnecessary background.
FIG. 13 is a diagram illustrating an example of a screen in a case where the print image is presentation materials including slides having a page with only a corporate logo at the end of the slides.
FIG. 14 is a diagram illustrating an example of a screen in a case where the print image is presentation materials including slides having a page in which an object extends beyond the page.
FIG. 15 is a diagram illustrating an example of a screen in a case where the print image is a web page in which an unnecessary portion, such as an advertisement, a header, etc., is present.
FIG. 16 is a diagram illustrating an example of a screen in which the print image is a web page including content which appears to be unnecessary at the end of the web page.
FIG. 17 is a diagram illustrating an example of a screen in a case where the print image is an image to be printed on a cheering fan.
FIG. 18 is a diagram illustrating an example of a screen in a case where the print image is the image to be printed on the cheering fan.
FIG. 19 is a diagram illustrating an example of a screen in a case where the print image is the image to be printed on the cheering fan.
FIG. 20 is a diagram illustrating an example of a screen in a case where the print image is a company brochure.
FIG. 21 is a diagram illustrating an example of a screen in a case where the print image is a photo.
FIG. 22 is a diagram illustrating an example of a screen in a case where the print image is a document and the number of output pages is plural.
FIG. 23 is a diagram illustrating an example of a screen in a case where the print image is the document and the number of output pages is plural.
FIG. 24 is a diagram illustrating an example of a screen requesting a user to select a printing layout.
FIG. 25 is a diagram illustrating an example of a screen requesting the user to select whether to display a stapler position.
FIG. 26 is a diagram illustrating an example of a screen in a case where the print image is the document and the number of output pages is plural.
FIGs. 27A and 27B are a flowchart illustrating a process performed by the terminal device so as to perform the screen display illustrated in FIG. 22 to FIG. 26.
FIG. 28 is a sequence diagram illustrating a process performed by each of the terminal device, the controller, and the printer, in a case where the log information relating to the printer is stored.
FIG. 29 is a diagram illustrating an example of log information stored by the controller.
FIG. 30 is a diagram illustrating an example of a screen displaying recommendation information which the printer causes a display part to display, in a case where the user directly operates the printer to perform printing.
FIG. 31 is a diagram illustrating an example of a screen displaying the recommendation information which the printer causes the display part to display, in a case where the user directly operates the printer to perform the printing.
FIGs. 32A and 32B are a sequence diagram illustrating a process performed by each of the printer, the controller, and the artificial intelligence system so as to perform the screen display illustrated in FIGs. 30 and 31.

### DESCRIPTION OF THE EMBODIMENT

In the following, an embodiment will be described with reference to the drawings.

### Image Processing System

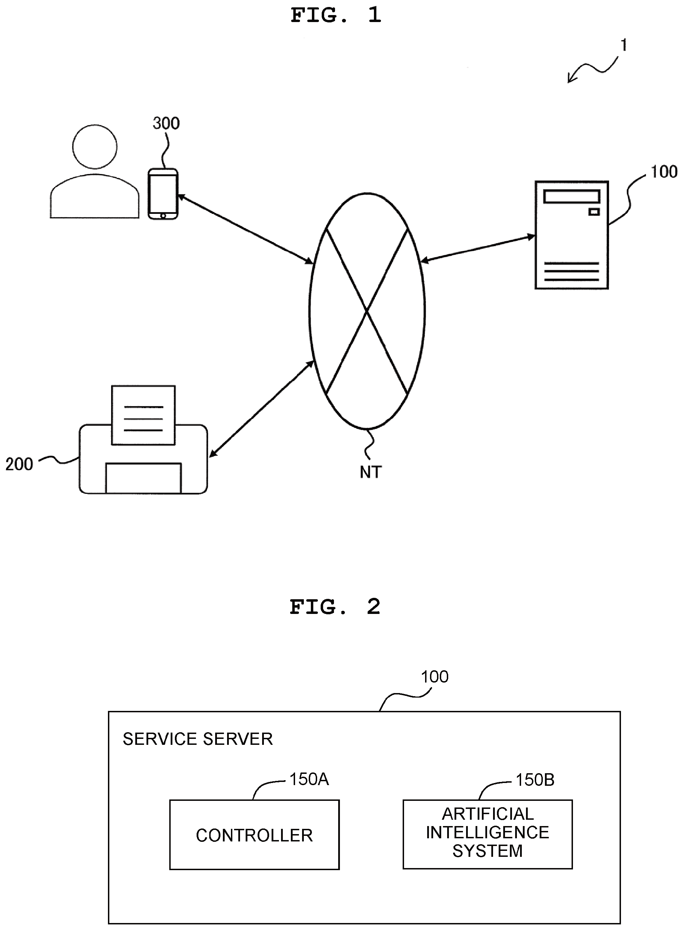

FIG. 1 is a diagram illustrating an example of the configuration of an image processing system 1 according to the embodiment. As illustrated in FIG. 1, the image processing system 1 includes a service server 100, a printer 200, and a terminal device 300. The service server 100, the printer 200, and the terminal device 300 are connected to a network NT and are capable of communicating with one another. The network NT includes, for example, the Internet, mobile phone communication lines, etc.

### Service Server

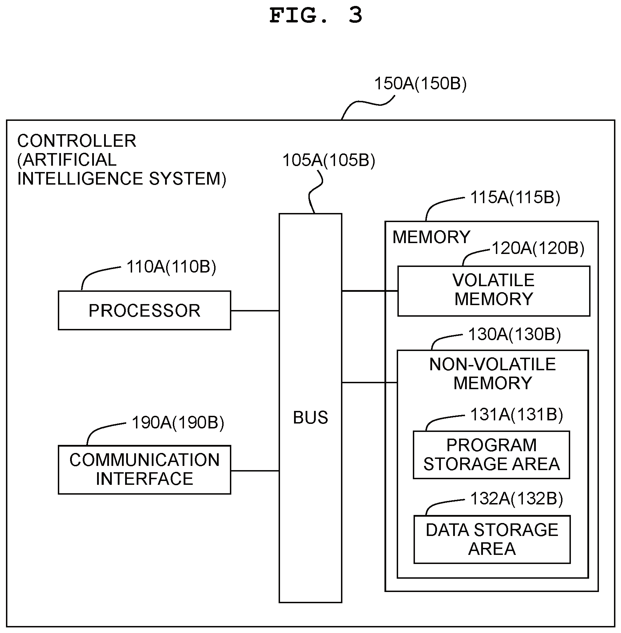

FIG. 2 is a diagram illustrating an example of the functional configuration of the service server 100. The service server 100 is, for example, a server computer including an artificial intelligence. As illustrated in FIG. 2, the service server 100 includes a controller 150A and an artificial intelligence system 150B. The controller 150A includes a processor 110A, a memory 115A, and a communication interface 190A, etc., as illustrated in FIG. 3 which will be described later. The controller 150A generates a prompt in accordance with an input relating to the printing and received from a user, the prompt relating to the printing to be performed by the printer 200, and outputs the prompt to the artificial intelligence system 150B. The artificial intelligence system 150B includes a general-purpose generative AI. Note that the general-purpose generative AI differs from a specialized generative AI which requires tuning. Examples of the general-purpose generative AI include GPT (Generative Pre-trained Transformer; a registered trademark of OpenAI, Inc.), Stable Diffusion, etc. The artificial intelligence system 150B performs various natural language processing tasks such as image analysis, text classification, sentiment analysis, information extraction, text summarization, text generation, and question-answering, based on the prompt input by the controller 150A. In the present embodiment, the artificial intelligence system 150B performs the image analysis based on the prompt input from the controller 150A. With respect to an image, the artificial intelligence system 150B determines image type, image output size, image usage, the number of output pages of the image, presence or absence of specific information, etc., based on the results of analysis (hereinafter referred to as "analysis results", in some cases). The artificial intelligence system 150B then outputs the analysis results to the controller 150A. The controller 150A obtains printer information from the printer 200. The printer information includes the capabilities of the printer 200, status information relating to the printer 200, etc. Based on the analysis results received from the artificial intelligence system 150B and the printer information, the controller 150A determines recommendation information relating to print settings to be recommended for printing by the printer 200. The controller 150A transmits the determined recommendation information to the terminal device 300. The terminal device 300 notifies the user of the received recommendation information as a message.

Note that the controller 150A and the artificial intelligence system 150B may be separated and configured, for example, as independent server computers. Further, the artificial intelligence system 150B may be configured into a plurality of artificial intelligence systems. A part of the hardware configuration of the controller 150A and a part of the hardware configuration of the artificial intelligence system 150B may be common.

FIG. 3 is a diagram illustrating an example of hardware configuration of each of the controller 150A and the artificial intelligence system 150B. Note that in FIG. 3, non-parenthesized reference numerals indicate the configuration of the controller 150A, while parenthesized reference numerals indicate the configuration of the artificial intelligence system 150B. As illustrated in FIG. 3, the controller 150A includes a processor 110A, a memory 115A, and a communication interface 190A. A bus 105A connects the processor 110A, the memory 115A, and the communication interface 190A such that data can be transmitted and received among the processor 110A, the memory 115A, and the communication interface 190A.

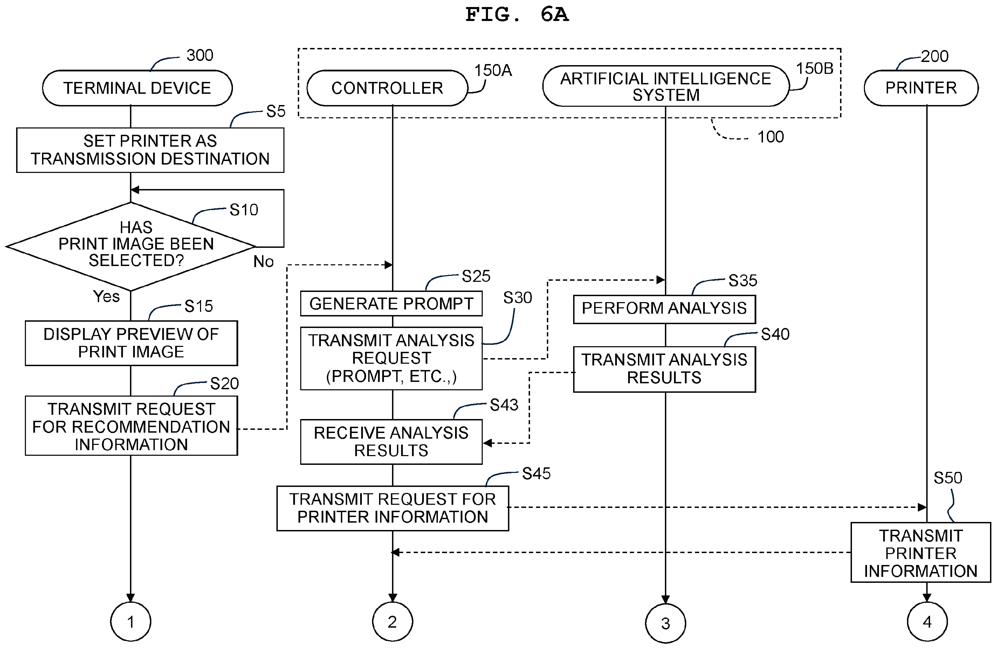

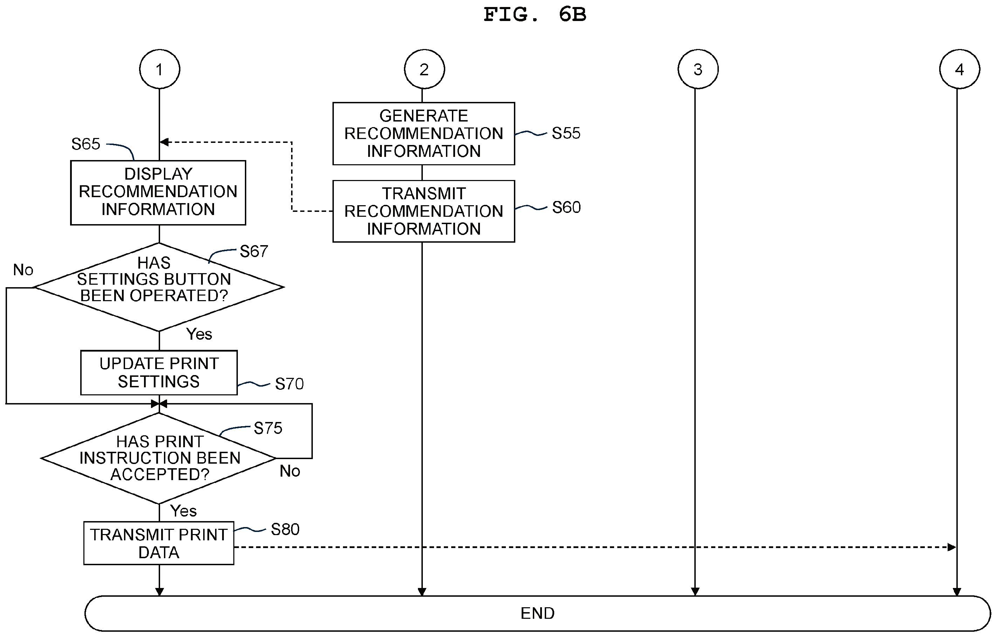

The memory 115A includes a volatile memory 120A and a non-volatile memory 130A. The volatile memory 120A is, for example, a DRAM, and stores various programs and data which are to be processed. The non-volatile memory 130A is, for example, a hard disk drive or a solid-state drive, and has a program storage area 131A and a data storage area 132A. The program storage area 131A stores various programs. The various programs include a processing program, etc., based on the sequences, etc., which are illustrated in FIGs. 6, 7, 28, and 32, etc., and which will be described later. The data storage area 132A stores various data generated or used by the various programs. The various data include a plurality of forms of the prompt, and log information relating to an operation history of the printer 200, etc.

The processor 110A is a device which performs data processing, and includes, for example, a CPU. The processor 110A executes the various programs stored in the program storage area 131A. The processor 110A performs various processes, including data communication with respect to the printer 200 and the terminal device 300, and data communication with respect to the artificial intelligence system 150B. An AI agent program is stored in the program storage area 131A. In response to the processor 110A executing the AI agent program, the processor 110A receives a request including a message or an image input by the user of the terminal device 300. The processor 110A analyzes the message or the image included in the received request and generates a prompt based on the results of the analysis. The processor 110A transmits the generated prompt to the artificial intelligence system 150B and receives a response from the artificial intelligence system 150B. The processor 110A transmits, to the terminal device 300, a response based on the response received from the artificial intelligence system 150B.

The communication interface 190A is a network interface including a communication circuit configured to connect to the network NT to thereby perform data communication with respect to the printer 200 or the terminal device 300. The communication interface 190A is also an interface including a communication circuit configured to perform data communication with respect to the artificial intelligence system 150B.

Note that the configuration of the memory 115A is not limited to the configuration described above in view of the device elements or components. For example, the memory 115A may be RAM, ROM, EEPROM, HDD, a portable storage medium such as a USB memory device attachable to the service server 100, a buffer included in the processor 110A, etc. Alternatively, the memory 115A may be configured by combining the above-described RAM, ROM, EEPROM, HDD, portable storage medium, and the buffer, etc.

Further, the memory 115A may be a computer-readable storage medium. A computer-readable storage medium is a non-transitory medium. The non-transitory medium also includes a recording medium such as CD-ROM, DVD-ROM, etc. Furthermore, a non-transitory medium is also a tangible medium. A memory 115B, a storage part 215 of the printer 200, or a memory 320 of the terminal device 300, which will be described later, may also be the storage media as described above.

As illustrated in FIG. 3, the artificial intelligence system 150B includes a processor 110B, a memory 115B, and a communication interface 190B. A bus 105B connects the processor 110B, the memory 115B, and the communication interface 190B such that data can be transmitted and received among the processor 110B, the memory 115B, and the communication interface 190B.

The memory 115B includes a volatile memory 120B and a non-volatile memory 130B. The volatile memory 120B, for example, is a DRAM and stores various programs and data to be processed. The non-volatile memory 130B is, for example, a hard disk drive or a solid-state drive, and has a program storage area 131B and a data storage area 132B. The program storage area 131B stores various programs. The various programs include a processing program, etc., based on the sequences, etc., which are illustrated in FIGs. 6, 7, 28, and 32, etc., and which will be described later. The data storage area 132B stores various data generated or used by the various programs. The various data include a general-purpose generative AI and various data sets necessary for operating the general-purpose generative AI.

The processor 110B is a device which performs data processing and includes a CPU and a GPU. The processor 110B executes the various programs stored in the program storage area 131B. The processor 110B performs various processes using a general-purpose generative AI. The processor 110B accepts a prompt generated by an AI agent program and outputs a response to an instruction or a question in the prompt.

The communication interface 190B is a network interface including a communication circuit configured to connect to the network NT to thereby perform data communication with the printer 200 or the terminal device 300. The communication interface 190B is also an interface including a communication circuit configured to perform data communication with respect to the controller 150A.

### Printer

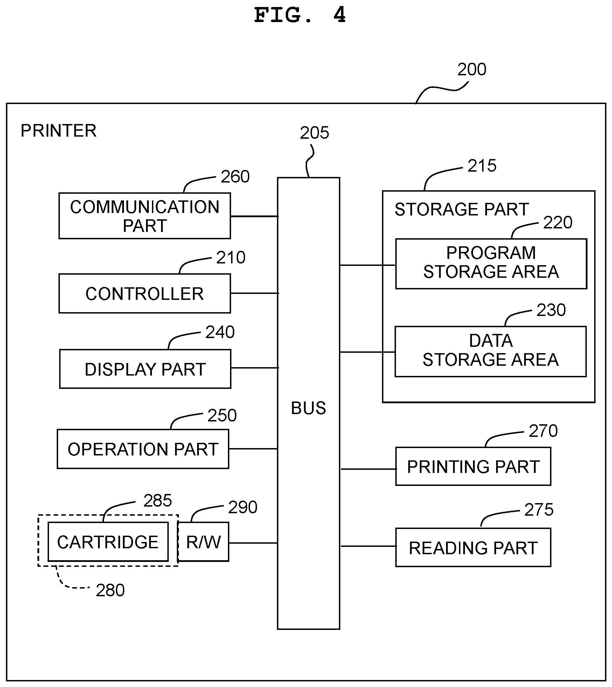

FIG. 4 is a diagram illustrating an example of the hardware configuration of the printer 200. As illustrated in FIG. 4, the printer 200 includes a controller 210, a storage part 215, a display part 240, an operation part 250, a communication part 260, a printing part 270, a reading part 275, etc. A bus 205 connects the controller 210, the storage part 215, the display part 240, the operation part 250, the communication part 260, the printing part 270, and the reading part 275 such that information can be transmitted and received among the controller 210, the storage part 215, the display part 240, the operation part 250, the communication part 260, the printing part 270, and the reading part 275. The printer 200 is an example of an "image processing apparatus".

The storage part 215 is, for example, RAM, ROM, EEPROM, HDD, etc. The storage part 215 stores various programs 220 and various data 230. The various programs 220 include, for example, the processing program, etc., based on the sequences illustrated in FIGs. 6, 28 and 32, which will be described later, etc. The various data 230 includes a printer ID, print data received from the terminal device 300, etc. The various data 230 may also include, for example, capability information relating to printing performed by the printer 200, the status information relating to the printer 200, etc., in addition to the above-described printer ID, print data received from the terminal device 300, etc.

The controller 210 is a device configured to perform data processing; the controller 210 is, for example, a processor such as a CPU, etc. The controller 210 executes the various programs stored in the storage part 215. The display part 240 is, for example, a liquid crystal display, and is configured to display a screen including various information items on the display. The operation part 250 is, for example, a keyboard, a button, etc., and configured to accept an input operation performed by the user. The user is capable of inputting various instructions to the printer 200 by operating the operation part 250. The communication part 260 is connected to the network NT and is capable of communicating with the service server 100 and the terminal device 300. The printing part 270 includes a printing engine, and is configured to cause a non-illustrated conveyor to pick up a sheet from a sheet tray and convey the sheet, and to form an image in, for example, the ink-jet system on the sheet.

The printer 200 includes a plurality of cartridge holders 280 each of which accommodates a corresponding one of a plurality of cartridges 285. The plurality of cartridges 285 are, for example, cartridges for a corresponding one of inks of a plurality of colors which are, for example, cyan, magenta, yellow, black, etc.

The printing part 270 performs a printing process of printing an image onto a sheet while consuming the ink from each of the cartridges 285. The printing process is an example of image processing and also an example of an output process for outputting the image. Each of the cartridge holders 280 includes a reader-writer 290. The reader-writer 290 is configured to read and write cartridge information from and to an IC chip included in each of the cartridges 285 accommodated in the corresponding one of the cartridge holders 280. For example, the reader-writer 290 reads the cartridge information from the IC chip to thereby detect the type, etc., of each of the cartridges 285 accommodated in the corresponding one of the cartridge holders 280. Note that the printer 200 may obtain a usage amount of the ink or a remaining amount of the ink, in each of the cartridges 285, which is stored in the IC chip, based on the above-described reading performed by the reader-writer 290.

The reading part 275 includes an image reading sensor such as a CIS (Contact Image Sensor) or a CCD (Charge-Coupled Device). The reading part 275 performs a reading process for causing the image reading sensor to read an original placed in a non-illustrated FB (Flatbed) or an ADF (Automatic Document Feeder).

### Terminal Device

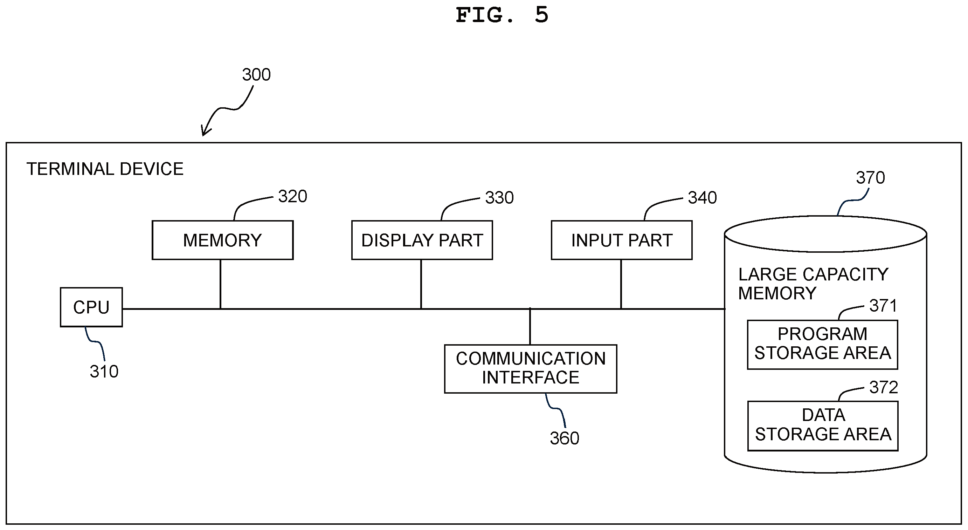

The terminal device 300 is a mobile terminal such as a smartphone, etc. The terminal device 300 may also be a general-purpose personal computer such as a notebook computer, a desktop computer, etc. FIG. 5 is a diagram illustrating an example of the hardware configuration of the terminal device 300. As illustrated in FIG. 5, the terminal device 300 includes a CPU 310, a memory 320 such as working memory, a display part 330, an input part 340, a communication interface 360, and a large capacity memory 370.

The large capacity memory 370 includes a program storage area 371 and a data storage area 372. The large capacity memory 370 is, for example, a hard disk drive or a flash memory. The program storage area 371 stores various programs. The various programs include, for example, the processing program based on the sequence, etc., described later and illustrated in FIGs. 6, 27, and 28, etc. The CPU 310 executes the various programs stored in the program storage area 371. The communication interface 360 includes a communication circuit configured to connect to and communicate with the network NT. The CPU 310 performs various processes, including data communication with the service server 100 and the printer 200 via the network NT and the communication interface 360.

The display part 330 is, for example, a touch panel, a liquid crystal display, etc., and configured to display various information items. The input part 340 is, for example, a touch panel, a keyboard, a mouse, etc., and accepts various operations by the user. The user is capable of inputting various instructions to the terminal device 300 by operating the input part 340.

### Features of Present Embodiment

In the image processing system 1 related to the present embodiment, the terminal device 300 sets the printer 200 as a transmission destination for an instruction to perform printing from the user. The terminal device 300 accepts an input relating to printing from the user with respect to the printer 200 which has been set, and transmits the content of the input to the controller 150A. The controller 150A generates a prompt in accordance with the accepted input, the prompt relating to the printing process to be performed by the printer 200, and outputs the prompt to the artificial intelligence system 150B. The artificial intelligence system 150B performs an analysis process, such as image analysis, based on the prompt which has been input, and produces a response including the results of the analysis to the controller 150A. The controller 150A obtains the printer information from the printer 200. Based on the analysis results received from the artificial intelligence system 150B and the printer information, the controller 150A determines the recommendation information relating to print settings to be recommended for printing by the printer 200. The controller 150A transmits the determined recommendation information to the terminal device 300. The terminal device 300 notifies the user of the received recommendation information, as the message.

In this manner, the image processing system 1 uses the artificial intelligence system 150B which includes the general-purpose generative AI, to notify the user of the recommendation information relating to the print settings for printing by the printer 200. Therefore, without generating any trained model, the image processing system 1 is capable of notifying the user of the appropriate print settings relating to the printer 200, via the message. In the following, the details of the above-described configuration will be described.

### Processing performed by Print Processing System

FIGs. 6A and 6B are a sequence diagram illustrating the process performed by each of the terminal device 300, the controller 150A, the artificial intelligence system 150B, and the printer 200. In the present embodiment, the entities each performing the process are: the CPU 310 of the terminal device 300, the processor 110A of the controller 150A, the processor 110B of the artificial intelligence system 150B, and the controller 210 of the printer 200.

The terminal device 300 first executes a print application program stored in the program storage area 371. The print application program is downloaded to the terminal device 300 from a non-illustrated server. The terminal device 300 performs processes hereinafter in accordance with the print application program. In step S5, the terminal device 300 performs settings relating to the printer 200 as the transmission destination for the instruction from the user to perform printing. The settings relating to the printer 200 include the selection of the printer 200, and print settings, etc. The CPU 310 of the terminal device 300 performing this step S5 is an example of a setting part. Furthermore, the CPU 310 of the terminal device 300 is an example of a computer, and step S5 is an example of a setting process and a setting step.

In step S10, the terminal device 300 determines whether an input from the user relating to the printing process with respect to the printer 200 set in step S5 has been accepted. In the present embodiment, the terminal device 300 determines whether the selection of a print image by the user has been accepted. The print image is an image to be processed in the printing process. The terminal device 300 repeats the process of step S10 until the terminal device 300 determines that the selection of the print image has been accepted (step S10: NO). In response to the terminal device 300 determining that the selection of the print image has been accepted (step S10: YES), the terminal device 300 proceeds with next step S15. The selection of the print image is an example of the input from the user relating to the image processing. The CPU 310, of the terminal device 300, which performs a process corresponding to the "YES" determination in step S10, is an example of an acceptance part. Further, the process in step S10 is an example of an acceptance process and an acceptance step.

In step S15, the terminal device 300 causes the display part 330 to display a print preview image of the print image selected in step S10. In the present embodiment, the term "print image" refers to image data copied for an editing purpose by the terminal device 300 from an image file or a document stored in the data storage area 372. The image file stored in the data storage area 372 includes, for example, an image file in JPEG format, etc. The document stored in the data storage area 372 includes, for example, a document in PDF format, etc. Further, the term "print preview image" refers to image data output for previewing the "print image". The image data which is output for preview includes, for example, image data in JPEG format, etc.

In step S20, the terminal device 300 transmits a request for the recommendation information to the controller 150A. The recommendation information is information which relates to print settings and which is to be recommended for printing by the printer 200. The request for the recommendation information includes the printer ID of the printer 200 selected in step S5, the print image, the current print settings relating to the print application program of the terminal device 300, etc. Note that the print image may be the image data per se or link information to the image data, etc. The link information is, for example, a URL indicating the storage location of the image data, etc. The controller 150A receives the request for the recommendation information from the terminal device 300.

In step S25, the controller 150A generates a prompt, in accordance with the input received by the terminal device 300, the prompt relating to the printing process to be performed by the printer 200 selected in step S5. The controller 150A generates the prompt which causes the artificial intelligence system 150B to produce a response including the analysis results of the print image included in the request for the recommendation information. For example, the controller 150A generates a prompt which causes the artificial intelligence system 150B to produce a response including the image type of the print image. Further, for example, the controller 150A generates a prompt which causes the artificial intelligence system 150B to produce a response including the output size of the print image. Furthermore, for example, the controller 150A generates a prompt which causes the artificial intelligence system 150B to generate a response including the usage of the print image. Moreover, for example, the controller 150A generates a prompt which causes the artificial intelligence system 150B to produce a response including the number of output pages of the print image. Further, for example, the controller 150A generates a prompt which causes the artificial intelligence system 150B to generate a response indicating whether the content of the print image includes predetermined specific information. The specific information is, for example, information indicating whether a continuation of the image exists. Specifically, the specific information includes, for example, an incomplete line, an incomplete image, an incomplete shape, and an incomplete letter. The specific information is also information that has no meaningful value for printing. Specifically, the specific information includes, for example, an unnecessary background, meaningless character string, symbol, and shape. Further, for example, the controller 150A generates a prompt which causes the artificial intelligence system 150B to infer the print settings to be expected by the user. The print settings to be expected by the user are examples of an expected operating condition relating to the printing process. Furthermore, for example, the controller 150A generates a prompt which causes the artificial intelligence system 150B to produce a response including the results of a comparison between the print settings to be expected by the user and the operation history of the printer 200 (hereinafter referred to as "comparison results", in some cases). Moreover, for example, the controller 150A generates a prompt which causes the artificial intelligence system 150B to produce a response indicating whether the operation history of the printer 200 satisfies a predetermined condition. Further, for example, the controller 150A generates a prompt which causes the artificial intelligence system 150B to produce a response including results of a comparison between the operation history of the printer 200 and specification information relating to the printer 200. The processor 110A of the controller 150A performing step S25 described above is an example of a prompt generation part. That is, the image processing system 1 includes the prompt generation part. Furthermore, the processor 110A of the controller 150A is an example of the computer, and step S25 is an example of a prompt generation process and a prompt generation step.

In step S30, the controller 150A transmits the analysis request to the artificial intelligence system 150B. The analysis request includes the prompt generated in step S25 and the print image, etc. The analysis request may include, as necessary, the printer ID of the printer 200, the operation history of the printing process in the printer 200, and specification information relating to the printer 200, etc. The artificial intelligence system 150B receives the analysis request transmitted from the controller 150A.

In step S35, the artificial intelligence system 150B performs the analysis in accordance with the analysis request received from the controller 150A. The artificial intelligence system 150B performs the analysis based on the prompt included in the analysis request.

In step S40, the artificial intelligence system 150B transmits the analysis results to the controller 150A.

In step S43, the controller 150A receives the analysis results from the artificial intelligence system 150B. The analysis results are examples of a response from the artificial intelligence system 150B. The processor 110A, of the controller 150A, which performs the process of each of step S30 and step S43 as described above, is an example of the interface part. That is, the image processing system 1 includes the interface part. Further, step S30 and step S43 as described above are examples of a response reception process and an example of a response reception step.

In step S45, the controller 150A transmits the request for the printer information to the printer 200 based on the printer ID received in step S20. The printer information includes the print settings relating to the printer 200, the status, the capabilities, etc., of the printer 200. The print settings relating to the printer 200 include, for example, sheet size, sheet type, etc. The printer 200 receives the request for printer information transmitted from the controller 150A.

In step S50, the printer 200 transmits the printer information to the controller 150A in accordance with the request for the printer information received from the controller 150A. The controller 150A receives the printer information from the printer 200.

In step S55, based on the analysis results from the artificial intelligence system 150B and the printer information, the controller 150A determines the print settings to be recommended for the printing process by the printer 200, and generates the recommendation information. The recommendation information is an example of a recommended operating condition to be recommended for the printing by the printer 200. A method for determining the recommended print settings is exemplified as follows. The first example is a method in which the controller 150A executes a predetermined program so as to determine the print settings based on rules. The program incorporates a process for determining a specific print setting, which is included in the print settings, in a case where the content of the analysis results from the artificial intelligence system 150B satisfies a specific condition. The controller 150A executes the above-described program so as to determine, as the recommended print settings, the print settings including a print setting corresponding to the analysis results from the artificial intelligence system 150B. The second example is a method for determining the print settings using a correspondence table. The print settings in association with the analysis results from the artificial intelligence system 150B are stored in the data storage area 132A of the controller 150A. The controller 150A generates the recommendation information corresponding to the analysis results from the artificial intelligence system 150B, based on the stored print settings. The third example is a method in which the controller 150A causes the artificial intelligence system 150B to determine the print settings. The controller 150A checks a response from the artificial intelligence system 150B; in a case where the print settings cannot be set with respect to the printer 200, the controller 150A corrects the print settings to print settings suitable for the printer 200. For example, the controller 150A generates recommendation information relating to the layout in the printing process. The recommendation information relating to the layout in the printing process is an example of a first recommended operating condition. Further, for example, the controller 150A also generates the recommendation information relating to the sheet. The recommendation information relating to the sheet is an example of the first recommended operating condition. Furthermore, for example, the controller 150A also generates the recommendation information relating to the color(s) in the printing process. The recommendation information relating to the color(s) in the printing process is an example of a second recommended operating condition. Moreover, for example, the controller 150A generates the recommendation information relating to the image quality in the printing process. The recommendation information relating to the image quality in the printing process is an example of a third recommended operating condition. Further, for example, the controller 150A generates the recommendation information relating to the function in the printing process. The recommendation information relating to the function in the printing process is an example of a fourth recommended operating condition. Furthermore, for example, the controller 150A generates the recommendation information relating to an image area in the printing process. The recommendation information relating to the image area in the printing process is an example of a fifth recommended operating condition. The processor 110A, of the controller 150A, which performs step S55 as described above, is an example of a condition determination part.

The controller 150A includes, in the recommendation information, information which is included in the analysis results from the artificial intelligence system 150B and which does not match both the current print settings relating to the print application program and the current print settings relating to the printer. The controller 150A does not include, in the recommendation information, information which is included in the analysis results from the artificial intelligence system 150B and which matches at least one of the print settings relating to the print application program, or the print settings relating to the printer. This prevents the recommendation information from becoming any excessive recommendation that might recommend, to the user, print settings identical to the current print settings.

Further, in step S55, the controller 150A determines warning content relating to the printer 200 and generates warning information based on a response from the artificial intelligence system 150B relating to the comparison results between the operation history of the printer 200 and the specification information relating to the printer 200. The processor 110A, of the controller 150A, performing step S55 as described above is an example of a warning determination part.

In step S60, the controller 150A transmits the recommendation information or the warning information generated in step S55 to the terminal device 300. The recommendation information or the warning information may be a command causing the terminal device 300 to display a screen which is displayed on the terminal device in the next step S65. The terminal device 300 receives the recommendation information or the warning information from the controller 150A.

In step S65, the terminal device 300 causes the display part 330 to display the screen relating to the recommended print settings, based on the recommendation information received from the controller 150A. That is, the terminal device 300 notifies, on the above-described screen, a message based on the analysis results from the artificial intelligence system 150B. Alternatively, the terminal device 300 causes the display part 330 to display a message relating to the warning content, based on the warning information received from the controller 150A. The CPU 310, of the terminal device 300, which performs step S65 as described above, is an example of a notification part. Further, step S65 is an example of a notification process and a notification step. Furthermore, in a case where the screen includes a print preview image to which the recommended print settings are applied, the terminal device 300 generates a print preview image and displays the generated print preview image, as with step S15.

In step S67, the terminal device 300 determines whether a selection operation for selecting a settings button has been accepted via the input part 340. The terminal device 300 displays various buttons relating to the recommended print settings in the screen displayed in step S65. These various buttons correspond, for example, to buttons B1 to B6, and buttons B9 to B18 which will be described later. In response to the terminal device 300 determining that the selection operation has been accepted with respect to any of the buttons B1 to B6 or any one of the buttons B9 to B18 (step S67: YES), the terminal device 300 proceeds with step S70. In response to the terminal device 300 determining that the selection operation for operating any of the buttons B1 to B6 or any one of the buttons B9 to B18 has not been accepted (step S67: NO), the terminal device 300 proceeds with step S75.

In step S70, the terminal device 300 updates a print setting which is included in the print settings relating to the print application program, and which corresponds to a button selected in step S67 among the buttons B1 to B6 or B9 to B18. The terminal device 300 updates the above-described print setting which is included in the print settings relating to the print application program, based on the content of the input entered by the user via the input part 340 in accordance with the message displayed on the display part 330 in step S65. Note that the term "update of the print setting(s)" includes a modification of the print image, such as removing a part of the print image. The modification of the print image corresponds to changing a print setting included in the print settings and relating to the print area. In a case where the terminal device 300 performs the modification of the print image, the terminal device 300 modifies a print image, which is a copy of the image file or the document stored in the data storage area 372, rather than modifying the image file or the document stored in the data storage area 372. The modification of the print image also causes the print preview image to be modified accordingly.

In step S75, the terminal device 300 determines whether a print instruction from the user to perform the printing has been accepted. The terminal device 300 displays a print button in the screen displayed in step S65. The print button corresponds, for example, to the button B8 which will be described later. In response to the terminal device 300 determining that the print instruction has not been accepted (step S75: NO), the terminal device 300 returns the process to step S75. In response to the terminal device 300 determining that the print instruction has been accepted (step S75: YES), the terminal device 300 proceeds with the next step S80.

In step S80, the terminal device 300 transmits, to the printer 200, print data for a print image based on the print setting which is included in the print settings relating to the print application program, and which has been updated in step S70. Note that the terminal device 300 may transmit the print data to the printer 200 via the service server 100.

In the above-described steps S25 to S43, the controller 150A may output either one prompt of one prompt type or prompts of a plurality of prompt types to the artificial intelligence system 150B. In a case that the controller 150A outputs the prompts of the plurality of prompt types, the controller 150A and the artificial intelligence system 150B may perform the transmission and reception of the analysis request and the analysis results a plurality of times. While doing so, the controller 150A may output the prompts of the plurality of prompt types to the artificial intelligence system 150B in stages. For example, based on the analysis results from the artificial intelligence system 150B relating to a first prompt, the controller 150A selects a form from the plurality of forms of the prompt stored in the memory 115A. The controller 150A generates a second prompt based on the selected form of the prompt, inputs the second prompt to the artificial intelligence system 150B, and receives the analysis results.

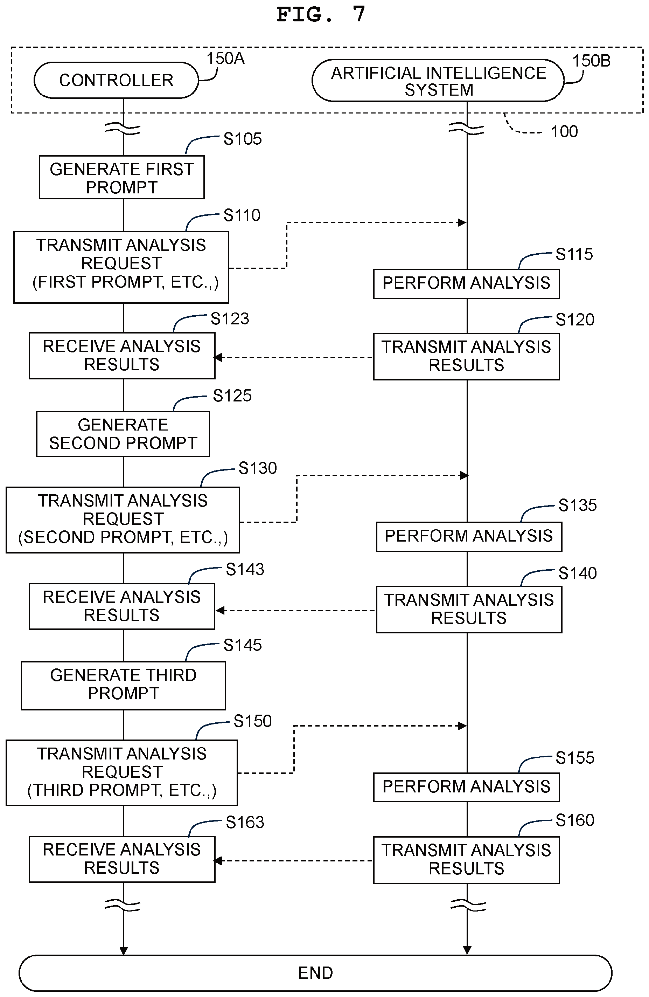

FIG. 7 is a sequence diagram illustrating a process performed by the controller 150A and the artificial intelligence system 150B in a case where the controller 150A outputs the prompts of the plurality of prompt types to the artificial intelligence system 150B in stages. Note that the process illustrated in FIG. 7 corresponds to steps S25 to S43 illustrated in FIG. 6A.

As illustrated in FIG. 7, in step S105, the controller 150A generates the first prompt based on the request for the recommendation information received from the terminal device 300. The first prompt is, for example, a prompt which causes the artificial intelligence system 150B to perform the image analysis of the print image and to produce a response including the image type of the print image, etc.

In step S110, the controller 150A transmits the analysis request to the artificial intelligence system 150B. The analysis request includes the first prompt generated in step S105 and the print image, etc. The artificial intelligence system 150B receives the analysis request from the controller 150A.

In step S115, the artificial intelligence system 150B performs the analysis in accordance with the analysis request received from the controller 150A. The artificial intelligence system 150B performs the image analysis based on the first prompt included in the analysis request.

In step S120, the artificial intelligence system 150B transmits the analysis results to the controller 150A.

In step S123, the controller 150A receives the analysis results from the artificial intelligence system 150B.

In step S125, the controller 150A generates the second prompt based on the analysis results received from the artificial intelligence system 150B. The second prompt is, for example, a prompt which causes the artificial intelligence system 150B to infer, based on the analyzed image type, the print settings to be expected by the user and to produce a response including the print settings to be expected by the user.

In step S130, the controller 150A transmits the analysis request to the artificial intelligence system 150B. The analysis request includes the second prompt generated in step S125 and the print image, etc. The artificial intelligence system 150B receives the analysis request from the controller 150A.

In step S135, the artificial intelligence system 150B performs the analysis in accordance with the analysis request received from the controller 150A. The artificial intelligence system 150B performs the image analysis based on the second prompt included in the analysis request.

In step S140, the artificial intelligence system 150B transmits the analysis results to the controller 150A.

In step S143, the controller 150A receives the analysis results from the artificial intelligence system 150B.

In step S145, the controller 150A generates a third prompt based on the analysis results received from the artificial intelligence system 150B. The third prompt is, for example, a prompt which causes the artificial intelligence system 150B to infer optimal print settings for the user, based on the print settings which corresponds to the analysis results and which is to be expected by the user and based on the operation history of the printer 200, and to produce a response including the optimal print settings.

In step S150, the controller 150A transmits the analysis request to the artificial intelligence system 150B. The analysis request includes the third prompt generated in step S145 and the log information which is information relating to the operation history of the printer 200, etc. The artificial intelligence system 150B receives the analysis request from the controller 150A.

In step S155, the artificial intelligence system 150B performs the analysis in accordance with the analysis request received from the controller 150A. The artificial intelligence system 150B performs the analysis based on the third prompt included in the analysis request.

In step S160, the artificial intelligence system 150B transmits the analysis results to the controller 150A.

In step S163, the controller 150A receives the analysis results from the artificial intelligence system 150B.

Note that although the foregoing description relates to an example wherein the controller 150A outputs the prompts of the three prompt types to the artificial intelligence system 150B, the controller 150A may output a prompt of one prompt type or prompts of a plurality of prompt types of which number is other than 3 (three) to the artificial intelligence system 150B. Further, for example, the controller 150A may output only the first prompt to the artificial intelligence system 150B. Alternatively, for example, the controller 150A may output the prompts of two prompt types, which are the first prompt and the second prompt, to the artificial intelligence system 150B.

### Specific Examples of Prompt

Next, specific examples of the prompt generated by the controller 150A will be described. Note that the prompts described below may be previously generated and stored in the memory 115A of the controller 150A, etc. Alternatively, the controller 150A may generate each of the prompts in real time in accordance with the request for the recommendation information from the terminal device 300. First, a specific example of the first prompt generated by the controller 150A in step S105 illustrated in FIG. 7 will be described below. The first prompt is an example of the prompt which causes the artificial intelligence to produce a response including the image type of the print image.

### First Prompt

Classify the print image into one of the following document types.
- If the print image cannot be classified into any of the following document types, please determine a new classification and produce a response including the new classification.
- With respect to a print image which cannot be classified or which is unknown, please reply "Unknown".
- With respect to a print image which can be classified into a plurality of document types, please include the plurality of document types in the response.

This classification is used as a basis for recommending the optimal print settings to the user, based on the document type(s).

### (Image Type)

- driver's license
- ID card
- business card
- small-size card
- advertisement, flyer
- point-of-purchase advertisement (POP advertisement)
- invitation, greeting card
- fan (cheering fan)
- photo
- character image (e.g., image of a fictional character)
- corporate logo
- slide
- spreadsheet
- document
- web page
- presentation materials

The controller 150A inputs information relating to the following input example, together with the first prompt, to the artificial intelligence system 150B. An input message in the input example indicates a path at which the print image received from the terminal device 300 is stored.

### Input example:

<input message>
   <print image>https://xxx/sample.jpeg<print image>
</input message>

In response to the first prompt and the information on the input example being input to the artificial intelligence system 150B, the artificial intelligence system 150B transmits information relating to the following output example to the controller 150A in step S120 illustrated in FIG. 7. Note that this output example is an example in a case where the image type is, for example, a flyer including a corporate logo.

### Output example:

<output message>
   <document type>flyer</document type>
   <document type>corporate logo</document type>
</output message>

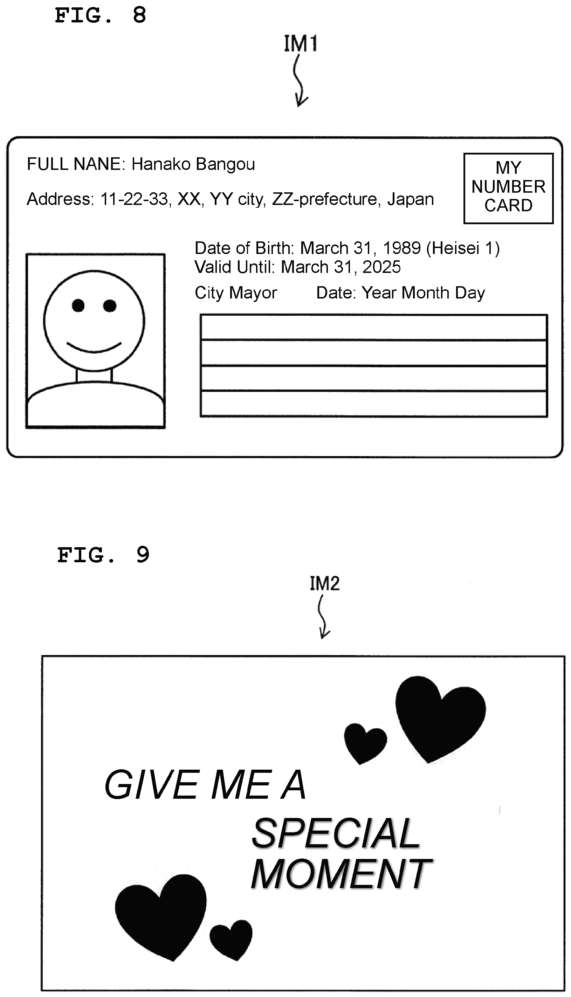

FIG. 8 is a diagram illustrating a print image in a case where the print image is an image IM1 of a My Number Card. In this case, the artificial intelligence system 150B transmits information relating to the following output example to the controller 150A, based on the first prompt. This output example is an output example wherein the artificial intelligence system 150B determines a new classification since the My Number Card cannot be classified into any one of the document types of the first prompt.

### Output example:

Input Image: https://xxx/.../input_image.jpg
Response: This is a "My Number Card".

Next, a specific example of the second prompt generated by the controller 150A in step S125 illustrated in FIG. 7 will be described below. The second prompt is an example of a prompt which causes the artificial intelligence system 150B to produce a response including the print settings to be expected by the user.

### Second Prompt

Based on the specified document type into which the print image has been classified and the content of the print image, please infer the print settings to be expected by the user.
- "Multiple-pages-per-sheet printing" when the image is smaller than an A4-size sheet and when inference indicates that printing a plurality of images on one sheet can save sheets.
- "Small-size sheet printing" when the image is smaller than an A4-size sheet and when inference indicates that one sheet is sufficient for printing the image.
- "Borderless printing" when inference indicates that the user wishes borderless printing, as in a flyer or POP advertisement.
- "Glossy paper printing" when inference indicates that the user wishes printing with high quality for a display purpose, as in a flyer or POP advertisements.
- "Enhanced color density" when inference indicates that the user wishes clear visibility, as in an invitation, a greeting card, or a cheering fan.
- "Vividness priority mode" when inference indicates that the user wishes to prioritize the image quality over the color reproducibility, as in a photo.
- "Color accuracy priority mode" when inference indicates that the print image includes a character image, a corporate logo, etc., and that the user wishes to prioritize color accuracy on the display.
- "Double-sided printing" when inference indicates that the print image is likely to have a back side.
- "2-in-1 ID copy" when inference indicates that the print image is likely to have a back side and is a small-size card.
- "Multiple-pages-per-sheet printing", "double-sided printing" or "eco-mode printing" when inference indicates that the user wishes to save sheets for the purpose of revising slides, etc.

The controller 150A inputs information relating to the following input example, together with the second prompt, to the artificial intelligence system 150B. Note that the following input example is an example in a case where the image type is, for instance, a flyer.

### Input example:

<input message>
   <print image>https://xxx/sample.jpeg<print image>
   <document type>flyer</document type>
</input message>

In response to the second prompt and the information relating to the input example being input to the artificial intelligence system 150B, the artificial intelligence system 150B transmits information relating to the following output example to the controller 150A in step S140 illustrated in FIG. 7. Note that the following output example is an example in a case where the image type is, for example, a flyer including a corporate logo.

### Output example:

<output message>
   <expected print settings>
      <print setting>borderless printing</print setting>
      <print setting>glossy paper printing</print setting>
   </expected print settings>
</output message>

Next, another example of the second prompt will be described below. This second prompt is an example of a prompt which causes the artificial intelligence system 150B to produce a response including the print settings to be expected by the user in a case where the image type is, for example, a spreadsheet.

### Second Prompt

Based on the specified document type into which the print image has been classified and the content of the print image, please check the following points and infer the print settings to be expected by the user.
(Point 1)
   - Item(s) to be checked
      Whether any object spanning (a plurality of) pages exists.
   - Recommendation content for the print settings
      Scale the object to fit within the page.
(Point 2)
   - Item(s) to be checked
      Whether the last page includes only content which appears to be unnecessary for printing.
(Example) The last page includes only a blank table, only a page number, etc.
   - Recommendation content for the print settings
      Not to print the last and unnecessary page.

The controller 150A inputs information relating to the following input example, together with the second prompt, to the artificial intelligence system 150B. Note that the following input example is an example in a case where the image type is, for example, a spreadsheet.

### Input example:

<input message>
   <print image>https://xxx/sample.jpeg<print image>
   <document type>spreadsheet</document type>
</input message>

In response to the second prompt and the information relating to the input example as described above being input to the artificial intelligence system 150B, the artificial intelligence system 150B transmits information relating to the following output example to the controller 150A in step S140 illustrated in FIG. 7.

### Output example:

<output message>
   <expected print settings>
      <print setting>Exclude the page from the print target</print setting>
   </expected print settings>
</output message>

Next, still another example of the second prompt will be described below. This second prompt is an example of a prompt which causes the artificial intelligence system 150B to infer the usage of the print image, based on the image type of the print image, and to produce a response including the usage of the print image.

### Second Prompt

Please infer the usage of the input print data and produce a response including the inferred usage. This classification will be used as a basis for determining the optimal print settings to be recommended to the user, based on the image type of the print image.

FIG. 9 is a diagram illustrating a print image in a case where the print image is an image IM2 to be printed on a cheering fan. In this case, the artificial intelligence system 150B transmits information relating to the following output example to the controller 150A, based on the second prompt. This output example is an example in a case where the second prompt is a prompt which causes the artificial intelligence system 150B to infer the usage of the print image based on the image type of the print image and to produce a response including the usage of the print image.

### Output example:

input image: https://xxx/.../input_image.jpg
Response: Used in a case where the user requests a special reaction or gesture from an artist or idol at an event or live performance.

Next, another example of the second prompt will be described below. This second prompt is an example of a prompt which causes the artificial intelligence system 150B to produce a response including the print settings to be expected by the user, in a case where the image type is, for example, a specific certificate such as a driver's license, a My Number Card, or a passport.

### Second Prompt

In a case where the input print image can be determined to be a specific certificate, such as a driver's license, a My Number Card, or a passport, please check the following points and infer the print settings to be expected by the user.
(Point 1)
   • Item(s) to be checked
      Whether the print image includes any unnecessary background.
   • Recommendation content for the print settings
      Print only a part, of the driver's license, indicating information on the driver's license.
(Point 2)
   • Item(s) to be checked
      Whether the size of the input image is appropriate with respect to the output size of the paper.
(Example) Attempting to print a driver's license to fill the entirety of an A4-size sheet.
   • Recommendation content for the print settings
      Scale the image to an appropriate size.
      Rotate the image, as necessary.

Next, still another example of the second prompt will be described below. This second prompt is an example of a prompt which causes the artificial intelligence system 150B to produce a response including the print settings to be expected by the user, in a case where the image type is, for example, a web page.

### Second Prompt

In a case where the input image can be determined to be a web page, please check the following points and infer the print settings to be expected by the user.
(Point 1)
   - Item(s) to be checked
      Whether the print image includes any unnecessary web advertisement.
   - Recommendation content for the print settings
      Print after removing the advertisement portion.
(Point 2)
   • Item(s) to be checked
      Whether the last page of the web page includes only content which appears to be unnecessary for printing.
(Example) The last page of the web page includes only the footer, etc.
   • Recommended print settings
      Not to print the last and unnecessary page of the web page.

Next, another example of the second prompt will be described below. This second prompt is an example of a prompt which causes the artificial intelligence system 150B to produce a response including the print settings to be expected by the user, in a case where the image type is, for example, presentation materials.

### Second Prompt

In a case where the input image can be determined to be presentation materials, please check the following points and infer the print settings to be expected by the user.
(Point 1)
   - Item(s) to be checked
      Whether any object extends beyond the frame.
   - Recommendation content for the print settings
      Remove any object that is extending beyond the frame.
      Alternatively, have the user modify the original.
(Point 2)
   - Item(s) to be checked
      Whether the last page includes only content which appears to be unnecessary for printing.
(Example) The last page includes only the footer, a closing greeting, or a corporate logo, etc.
   - Recommendation content for the print settings
      Not to print the last and unnecessary page.

Next, still another example of the second prompt will be described below. This second prompt is an example of a prompt which causes the artificial intelligence system 150B to produce a response including the print settings to be expected by the user, in a case where the image type is, for example, an advertisement or flyer.

### Second Prompt

In a case where the input image can be determined to be an advertisement or flyer, please check the following points and infer the print settings to be expected by the user.
(Point 1)
   - Item(s) to be checked
      Whether the print image includes any typo or missing character.
   - Recommendation content for the print settings
      Correct if the typo or missing character can be easily fixed.
      If the typo or missing character cannot be easily fixed, recommend a correction for the typo or missing character to the user.
(Point 2)
   - Item(s) to be checked
      Whether the print settings are appropriate.
(Example) Whether borderless printing is selected, whether the high image quality is selected, etc.
   - Recommendation content for the print settings
      Make a change to the settings, such as selecting the borderless printing, which is deemed more appropriate.

Next, another example of the second prompt will be described below. This second prompt is an example of a prompt which causes the artificial intelligence system 150B to produce a response including the print settings to be expected by the user, as a final check, after the analysis based on the image type as described above has been performed.

### Second Prompt

Please check the following points and infer the print settings to be expected by the user.
(Point 1)
   - Item(s) to be checked
      Whether the elimination of margins can reduce the number of output pages for printing.
   - Recommendation content for the print settings
      Reduce the number of pages by eliminating the margins.
(Point 2)
   - Item(s) to be checked
      Whether the print image includes unnecessary margins, and whether enlarging the print image can improve readability.
(Example) By removing the web advertisement, the letters of main text can be printed larger, improving the readability.
   - Recommendation content for the print settings
      Enlarge the print image without disrupting the page count or layout.

Next, a specific example of the third prompt generated by the controller 150A in step S145 illustrated in FIG. 7 will be described below. The third prompt is an example of a prompt which causes the artificial intelligence system 150B to produce a response including the optimal print settings for the user.

### Third Prompt

Based on the specified document type into which the print image has been classified, the content of the print image, the inferred printing settings to be expected by the user, and the usage history log, please infer the optimal print settings, functions, and usage method for the user.
- When the user is attempting to perform printing of which content is similar to the content of printing previously performed, but in different settings from the settings in the previously performed printing, confirm whether the user has forgotten to perform the settings.
- For example, in a case where the user has performed double-sided printing in the last three printings, and where the current printing is to be performed in single-sided printing, check for "double-sided printing (whether the user forgets to set the double-sided printing").
- Confirm whether the user is not using the image forming system in a non-recommended manner that might lead to malfunction.
- For example, in a case where the total power-on count immediately after printing is increased by 10 or more times per day, display a message "Please wait a while after printing is completed, and then turn the power off'.
- Recommend "ADF scan" in a case where an apparatus including an ADF function performs an FB scan for a multi-page original 3 or more times per week.

The controller 150A inputs information relating to the following input example, together with the third prompt as described above, to the artificial intelligence system 150B. Note that this input example is an example in a case where the artificial intelligence system 150B infers the print settings in which 1-in-1, glossy paper, and double-sided printing OFF are selected, as the print settings to be expected by the user. The 1-in-1 refers to a layout setting in which one print image is printed on a single sheet. A path in which the usage history of the printer 200 is stored is indicated in an item, in the input message, indicating the usage history.

### Input example:

<input message>
   <print image>https://xxx/1.jpeg<print image>
   <app print settings>
      <print image hash value:111>
      <layout>1in1</layout>
      <sheet type>glossy paper</sheet type>
      <double-sided printing>OFF</double-sided printing>
   </app print settings>
   <usage history>https://xxx/1.log</usage history>
   </input message>

In response to the above-described third prompt being input to the artificial intelligence system 150B, the artificial intelligence system 150B transmits information relating to the following output example to the controller 150A in step S160 illustrated in FIG. 7. This output example is an example in a case where in the print settings which have been inferred, by the artificial intelligence system 150B to be expected by the user, based on the comparison between the print settings to be expected by the user and the operation history of the printer 200, the glossy paper is changed to the plain paper and the double-sided printing is changed from OFF to ON.

### Example of Output:

<output message>
   <expected print settings>
      <sheet type>plain paper</sheet type>
      <double-sided printing>ON</double-sided printing>
   </expected print settings>
</output message>

### Examples of Recommendation Screen on Terminal Device

Next, an example of a screen displaying the recommendation information displayed by the terminal device 300 on the display part 330 will be described. Note that the example of the screen described below is an example of the screen displayed by the terminal device 300 on the display part 330 in step S65 and step S70 illustrated in FIG. 6B.

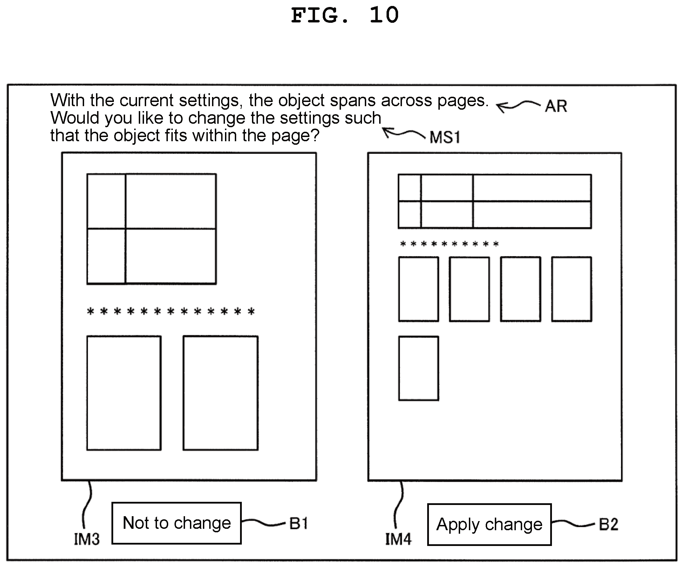

FIG. 10 is a diagram illustrating an example of a screen in a case where the artificial intelligence system 150B produces a response indicating that the print image is a spreadsheet and that an object spanning a plurality of pages exists. In this case, the controller 150A recommends changing an output size setting which is included in the print settings, and which relates to the output size of the image such that the object fits appropriately within a page. As illustrated in FIG. 10, the terminal device 300 displays a message MS1 in a display region AR of the screen, asking the user whether to change the print settings such that the object fits within the page. Further, the terminal device 300 displays a print preview image IM3 in which the print settings are not changed and a print preview image IM4 in which the print image is reduced to fit the object within the page. The message MS1 and the print preview image IM4 are examples of the recommendation information. The user can select not to change the print settings by pressing the button B1, and can select to change the print settings by pressing the button B2. That is, each of the buttons B1 and B2 accepts, from the user, an input to select an operating condition relating to the printing process to be performed by the printer 200, and an input to select the print image. The buttons B1 and B2 are examples of an acceptance region. FIG. 10 illustrates an example in which, print settings which are included in the print settings and which relate to the printing layout and the print area are changed, based on the image type of the print image and the output size of the print image.

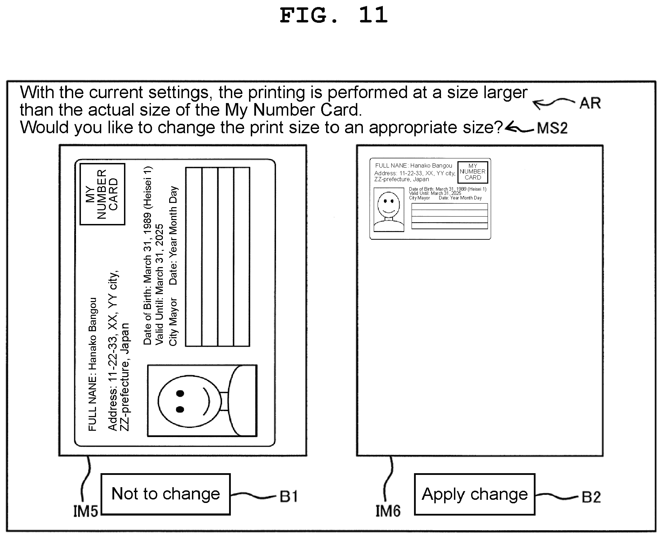

FIG. 11 is a diagram is a diagram illustrating an example of a screen in a case where the artificial intelligence system 150B produces a response indicating that the print image is a My Number Card, and that the output size of the print image in the current print settings corresponds to the sheet size. In this case, the controller 150A recommends changing the output size setting such that the print image is printed at the actual size of the print image. As illustrated in FIG. 11, the terminal device 300 displays, in the display region AR of the screen, a message MS2 in the display region AR of the screen, asking the user whether to change the print settings such that the My Number Card is printed at the actual size of the My Number Card. Further, the terminal device 300 displays a print preview image IM5 in which the settings are not changed and a print preview image IM6 in which the size of the print image is reduced such that the My Number Card is printed at the actual size of the My Number Card. The message MS2 and the print preview image IM6 are examples of the recommendation information. The user can select not to change the print settings by pressing the button B1, and can select to change the print settings by pressing the button B2. FIG. 11 is an example in which a print setting included in the print settings and relating to the printing layout is changed based on the image type and the output size of the print image.

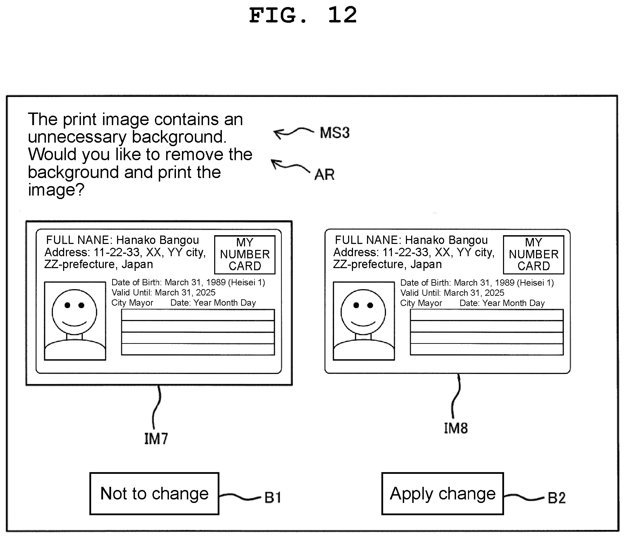

FIG. 12 is a diagram illustrating an example of a screen in a case where the artificial intelligence system 150B produces a response indicating that the print image is a My Number Card and that the print image includes unnecessary background. In this case, the controller 150A generates recommendation information recommending changing a setting included in the print setting and relating to the print area so as to remove, from the print image as a print target, the background portion of the print image. As illustrated in FIG. 12, the terminal device 300 displays a message MS3, in the display region AR of the screen, the message MS3 asking the user whether to change the print settings so as to perform printing after removing the background portion of the My Number Card. Further, the terminal device 300 displays a print preview image IM7 in which the print settings are not changed, and a print preview image IM8 in which the background portion of the My Number Card is removed. The message MS3 and the print preview image IM8 are examples of the recommendation information. The user can select not to change the print settings by pressing the button B1, and can select to change the print settings by pressing the button B2. FIG. 12 is an example in which the print setting included in the print settings and relating to the print area is changed based on the image type and the presence or absence of the specific information. The unnecessary background is an example of the specific information.

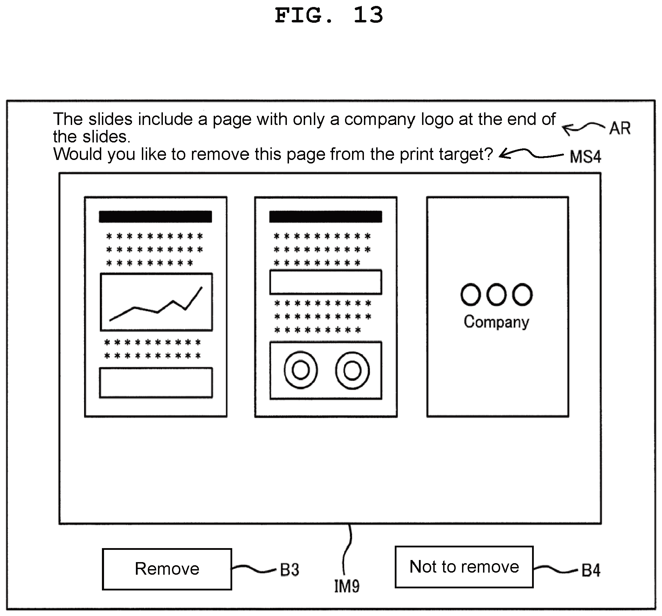

FIG. 13 is a diagram illustrating an example of a screen in a case where the artificial intelligence system 150B produces a response indicating that the print image is presentation materials and that slides in the presentation materials include a page with only a corporate logo at the end of the slides. In this case, the controller 150A generates recommendation information recommending changing a setting included in the print setting and relating to the print area so as to exclude the last page (slide) of the slides from the print target. As illustrated in FIG. 13, the terminal device 300 displays a message MS4 in the display region AR of the screen, the message MS4 asking the user whether to exclude the page with only the corporate logo from the print target. Further, the terminal device 300 displays a print preview image including the page with only the corporate logo, namely a print preview image IM9 in which the print settings are not changed. The message MS4 is an example of the recommendation information. The user can select to exclude the page with only the corporate logo from the print target by pressing the button B3, and can select not to exclude the page with only the corporate logo from the print target by pressing the button B4. That is, each of the buttons B3 and B4 accepts, from the user, the input to select the operating condition relating to the printing process to be performed by the printer 200. The buttons B3 and B4 are examples of the acceptance region. FIG. 13 illustrates an example in which the print setting included in the print settings and relating to the print area is changed, based on the image type of the print image and the presence or absence of the specific information. The page with only the corporate logo is an example of the specific information.

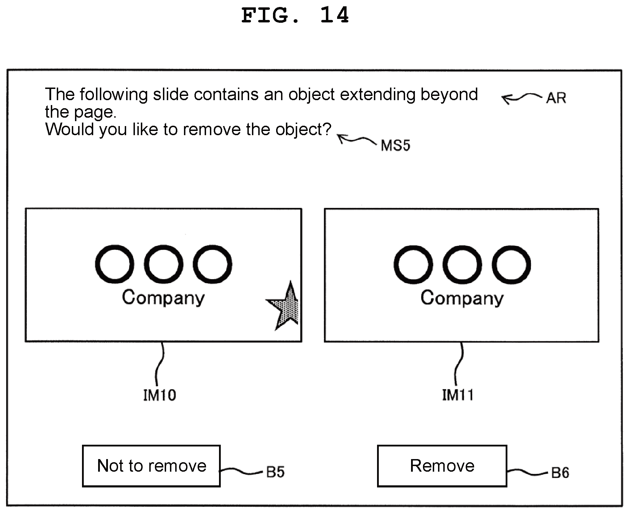

FIG. 14 is a diagram illustrating an example of a screen in a case where the artificial intelligence system 150B produces a response indicating that the print image is presentation materials and that slides in the presentation materials include a page in which an object extending beyond the page exists. In this case, the controller 150A generates recommendation information recommending changing the setting relating to the print area so as to remove the object extending beyond the page from the print target. As illustrated in FIG. 14, the terminal device 300 displays a message MS5 in the display region AR of the screen, the message MS5 asking the user whether to remove the object. Further, the terminal device 300 displays a print preview image IM10 in which the object is not removed, and a print preview image IM11 in which the object is removed. The message MS5 and the print preview image IM11 are examples of the recommendation information. The user can select not to remove the object by pressing the button B5, and can select to remove the object by pressing the button B6. That is, each of the buttons B5 and B6 accepts, from the user, the input to select the operating condition for the printing process to be performed by the printer 200, and the input to select the print image. The buttons B5 and B6 are examples of the acceptance region. FIG. 14 illustrates an example of a case in which the print setting included in the print settings and relating to the print area is changed, based on the image type of the print image and the presence or absence of the specific information. The object which is incomplete in the page (extending beyond the page) is an example of the specific information.

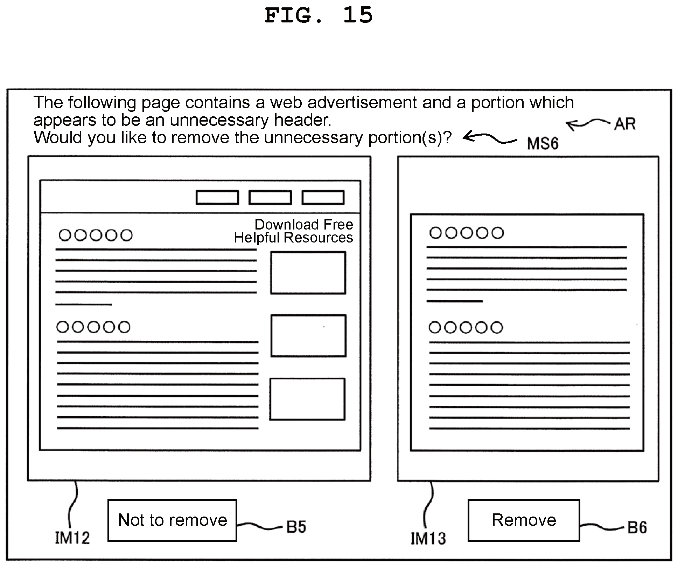

FIG. 15 is a diagram illustrating an example of a screen in a case where the artificial intelligence system 150B produces a response indicating that the print image is a web page and that an unnecessary portion, such as an advertisement or header, exists in the web page. In this case, the controller 150A generates recommendation information recommending changing the setting relating to the print area so as to remove the unnecessary portion from the print target. As illustrated in FIG. 15, the terminal device 300 displays a message MS6 in the display region AR of the screen, the message MS6 asking the user whether to remove the unnecessary portion. Further, the terminal device 300 displays a print preview image IM12 in which the unnecessary portion is not removed, and a print preview image IM13 in which the unnecessary portion is removed. The message MS6 and the print preview image IM13 are examples of the recommendation information. The user can select not to remove the unnecessary portion by pressing the button B5, and can select to remove the unnecessary parts by pressing the button B6. FIG. 15 illustrates an example in which the print setting included in the print settings and relating to the print area is changed, based on the image type of the print image and the presence or absence of the specific information. The advertisement, the header, etc., are examples of the specific information.

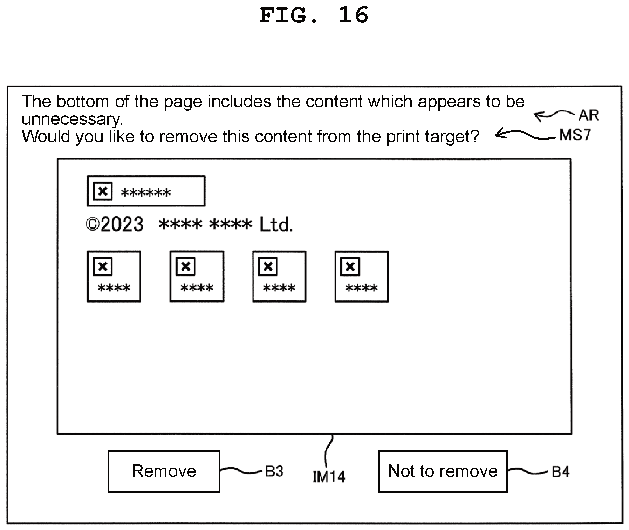

FIG. 16 is a diagram illustrating an example of a screen in a case where the artificial intelligence system 150B produces a response indicating that the print image is a web page and that the web page includes content which appears to be unnecessary at the end of the web page. The content which appears to be unnecessary includes, for example, a meaningless string, a symbol or image indicating an invalid link, etc. In this case, the controller 150A generates recommendation information recommending changing the setting relating to the print area so as to remove the unnecessary portion from the print target. As illustrated in FIG. 16, the terminal device 300 displays a message MS7 in the display region AR of the screen, the message MS7 asking the user whether to remove the content which appears to be unnecessary from the print target. Further, the terminal device 300 displays a print preview image IM14 including the content which appears to be unnecessary, that is, a print preview image in which the print settings are not changed. The message MS7 is an example of the recommendation information. The user can select to remove the content which appears to be unnecessary from the print target by pressing the button B3, and can select not to remove the content which appears to be unnecessary by pressing the button B4. FIG. 16 is an example in which the print setting included in the print settings and relating to the print area is changed, based on the image type of the print image and the presence or absence of the specific information. The meaningless string, the symbol or image indicating the invalid link, etc., are examples of the specific information.

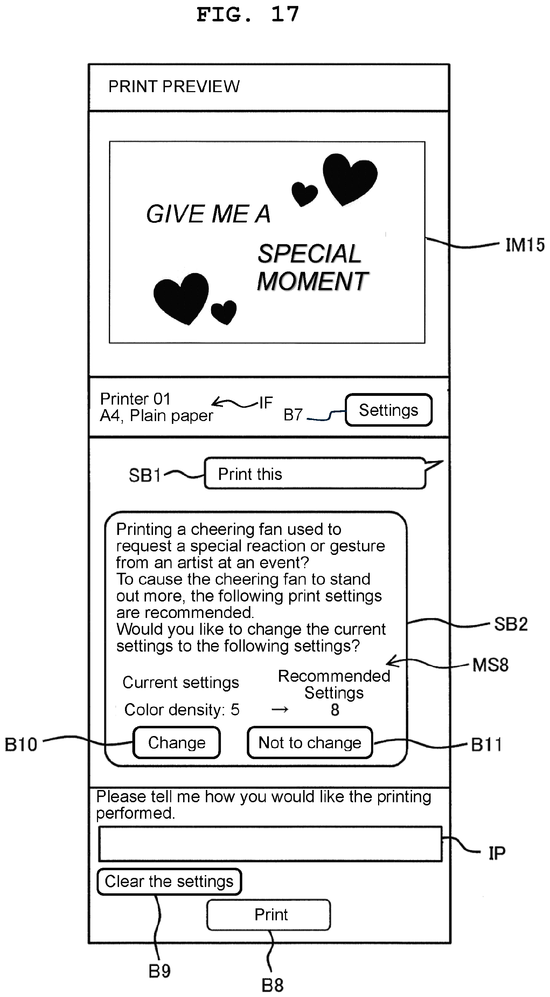

Next, another example of a screen in a case where the terminal device 300 displays the recommendation information on the display part 330 will be described. FIGs. 17 to 19 are diagrams each illustrating an example of a screen in a case where the print image is an image to be printed on a cheering fan. As illustrated in FIG. 17, the terminal device 300 displays, on the print preview screen: a print preview image IM15 which is an image to be printed on the cheering fan; printing-related information IF relating to the model of the printer 200 which is currently set, the sheet size, etc.; a settings button B7; an input region IP: a print button B8; and a clear button B9. The terminal device 300 displays, in a speech bubble, a message input by the user in the input region IP. In response to the user operating the settings button B7, the terminal device 300 displays the content of the current print settings in the print preview screen. In response to the user operating the print button B8, the terminal device 300 transmits, to the printer 200, print data which is based on the print settings which have been changed in accordance with the input content of the input by the user or based on the print settings which have not been changed, such that the printer 200 performs the printing. In response to the user operating the clear button B9, the terminal device 300 initializes the print settings.

As illustrated in FIG. 17, the terminal device 300 displays, in a speech bubble SB1, the print instruction input by the user in the input region IP. The print instruction includes, for example, a message having content "Print this". Based on the image type and the image usage analyzed by the artificial intelligence system 150B, the terminal device 300 displays, in a speech bubble SB2, a message MS8 asking the user whether to change the color density. The speech bubble SB2 is an example of the display region. The message MS8 includes a message recommending changing the color density, for example, from "5" to "8" to thereby enhance the density of the print image. The message MS8 is an example of the recommendation information. The user can select to change the color density by pressing the button B10 displayed in the speech bubble SB2, and can select not to change the color density by pressing the button B11. That is, each of the buttons B10 and B11 accepts the input from the user to select the operating condition relating to the printing process to be performed by the printer 200. The buttons B10 and B11 are examples of the acceptance region. Note that terminal device 300 may display the speech bubble SB2 together with the print preview image IM15 even in a case where the user does not input the print instruction to the input region IP.

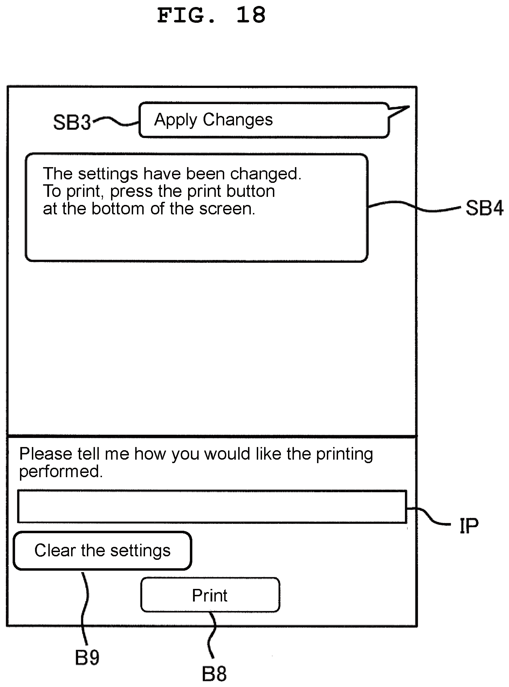

FIG. 18 is a diagram illustrating an example of a screen in a case where the user presses the button B10 illustrated in FIG. 17. As illustrated in FIG. 18, the terminal device 300 displays, in a speech bubble SB3, that the user has selected "Apply Changes" (namely, to change the settings) by operating the button B10 as illustrated in FIG. 17. The terminal device 300 displays, in a speech bubble SB4, a message having content that the print settings have been changed. Although not illustrated in FIG. 18, the terminal device 300 displays the print preview image IM15 in which the change in the color density is reflected. The user can then press the print button B8 to thereby transmit print data based on the changed print settings to the printer 200 and to perform printing.

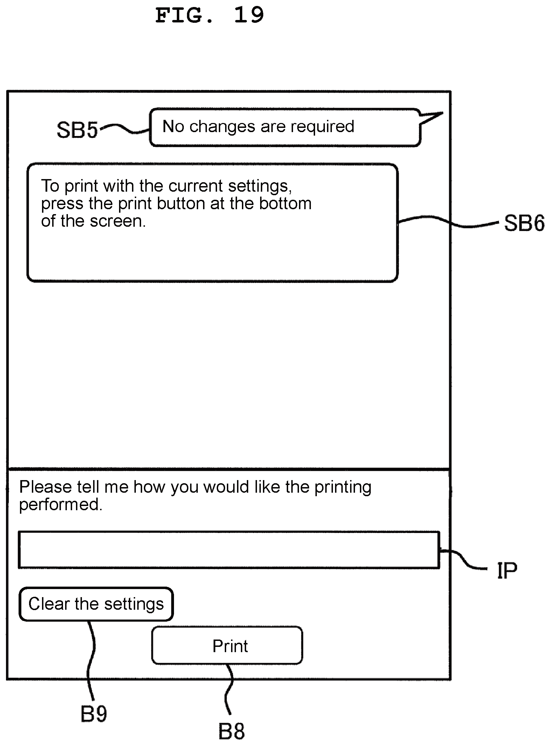

FIG. 19 is a diagram illustrating an example of a screen in a case where the user presses the button B11 illustrated in FIG. 17. As illustrated in FIG. 19, the terminal device 300 displays, in a speech bubble SBS, that the user has selected "Do Not Change" (namely, to keep the current settings) by operating the button 11 as illustrated in FIG. 17. The terminal device 300 displays, in a speech bubble SB6, a message prompting the user to print without changing the print settings. The user can then press the print button B8 to thereby transmit print data based on the unchanged print settings to the printer 200 and to perform printing. FIGs. 17 to 19 illustrate an example in a case where the print setting included in the print settings and relating to the print colors is changed, based on the image type and the image usage of the print image.

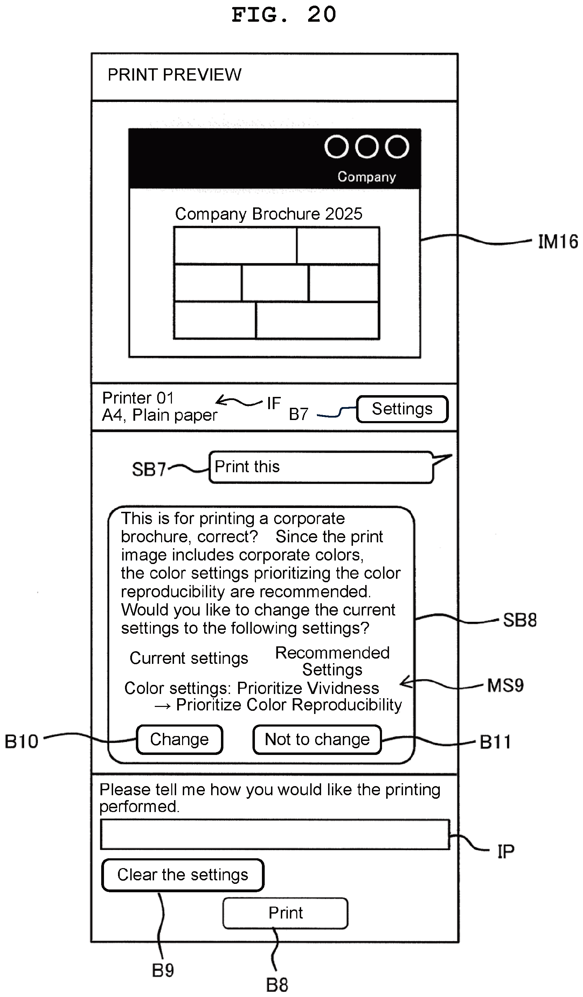

FIG. 20 is a diagram illustrating an example of a screen in a case where the artificial intelligence system 150B produces a response indicating that the print image is a company brochure. In this case, the controller 150A generates recommendation information recommending changing the color setting of the print image. As illustrated in FIG. 20, the terminal device 300 displays, on the print preview screen, a print preview image IM16 which is the company brochure, etc. The terminal device 300 displays, in a speech bubble SB7, the print instruction input by the user to the input region IP. The terminal device 300 displays, in a speech bubble SB8, a message MS9 asking the user whether to change the color setting based on the image type analyzed by the artificial intelligence system 150B. The speech bubble SB8 is an example of the display region. The message MS9 includes a message recommending changing the color setting, for example, from "Vividness Priority" to "Color Reproducibility Priority". The color settings "Vividness Priority" and "Color Reproducibility Priority" are preset. The message MS9 is an example of the recommendation information. The user can select to change the color setting by pressing the button B10 displayed in the speech bubble SB8, and can select not to change the color setting by pressing the button B11.

An example of a screen in a case where the user presses the button B10 is the same as the example of the screen illustrated in FIG. 18. In response to the user pressing the button B10, the terminal device 300 displays the print preview image IM16 in which the change in the color setting is reflected. An example of a screen in a case where the user presses the button B11 is the same as the example of the screen illustrated in FIG. 19. FIG. 20 is an example in a case where the print setting included in the print settings and relating to the print color is changed based on the image type of the print image.

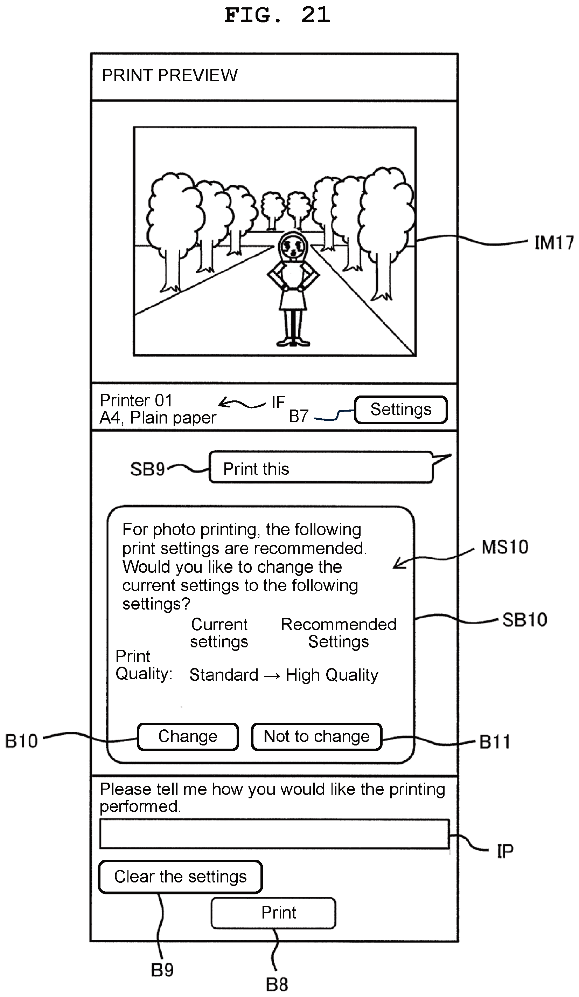

FIG. 21 is a diagram illustrating an example of a screen in a case where the artificial intelligence system 150B produces a response indicating that the print image is a photo. In this case, the controller 150A generates recommendation information recommending changing a setting included in the print settings and relating to the image quality of the print image (hereinafter referred to as "print image quality", in some cases). As illustrated in FIG. 21, the terminal device 300 displays, on the print preview screen, a print preview image IM17 which is an image of the photo, etc. The terminal device 300 displays, in a speech bubble SB9, a print instruction input by the user to the input region IP. The terminal device 300 displays, in a speech bubble SB10, a message MS10 asking the user whether to change the image quality of the print image, based on the image type analyzed by the artificial intelligence system 150B. The speech bubble SB10 is an example of the display region. The message MS10 includes a message recommending changing the print image quality, for example, from "Standard" to "High Image Quality". The message MS10 is an example of the recommendation information. The user can select to change the print image quality by pressing the button B10 displayed in the speech bubble SB10, and can select not to change the print image quality by pressing the button B11.

An example of a screen in a case where the user presses the button B10 is the same as the example of the screen illustrated in FIG. 18. In response to the user pressing the button B10, the terminal device 300 displays the print preview image IM17 in which the change in the print image quality is reflected. An example of a screen in a case where the user presses the button B11 is the same as the example of the screen illustrated in FIG. 19. FIG. 21 is an example in a case where the print setting included in the print settings and relating to the print image quality is changed based on the image type of the print image.

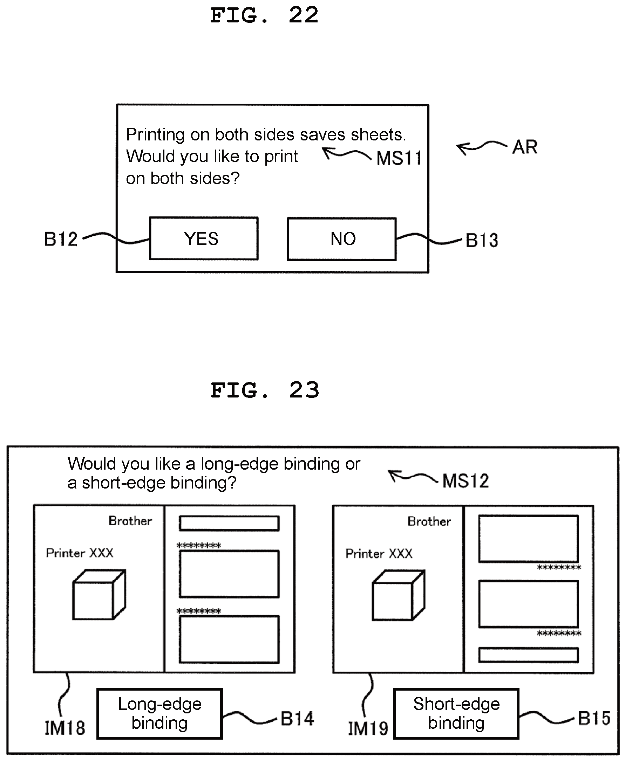

Next, still another example of the screen in a case where the terminal device 300 displays the recommendation information in the display part 330 will be described. FIGs. 22 to 26 are diagrams each illustrating an example of a screen in a case where the artificial intelligence system 150B produces a response indicating that the print image is a document and the number of output pages of the print image is plural. In this case, for example, the controller 150A generates recommendation information recommending double-sided setting, 2-in-1, or 4-in-1 with respect to the print image. As illustrated in FIG. 22, the terminal device 300 displays, in the display region AR of the screen, a message MS11 asking the user whether to perform printing with the double-sided printing. The message MS11 is an example of the recommendation information. The user can select the double-sided printing by pressing the button B12, and can select not to perform the double-sided printing by pressing the button B13. FIG. 22 is an example of a case where, based on the image type and the number of output pages of the print image, a print setting included in the print settings and relating to a function relating to the double-sided printing of the printer 200 is changed.

FIG. 23 is a diagram illustrating an example of a screen in a case where the user presses the button B12 illustrated in FIG. 22. As illustrated in FIG. 23, the terminal device 300 displays a message MS12 asking the user the type of the double-sided printing is to be which one of long-edge binding or short-edge binding. Further, the terminal device 300 displays a print preview image IM18 in a case where the double-sided printing is to be performed with the long-edge binding and a print preview image IM19 in a case where the double-sided printing is to be performed with the short-edge binding. The user can select the long-edge binding by pressing the button B14, and can select short-edge binding by pressing the button B15.

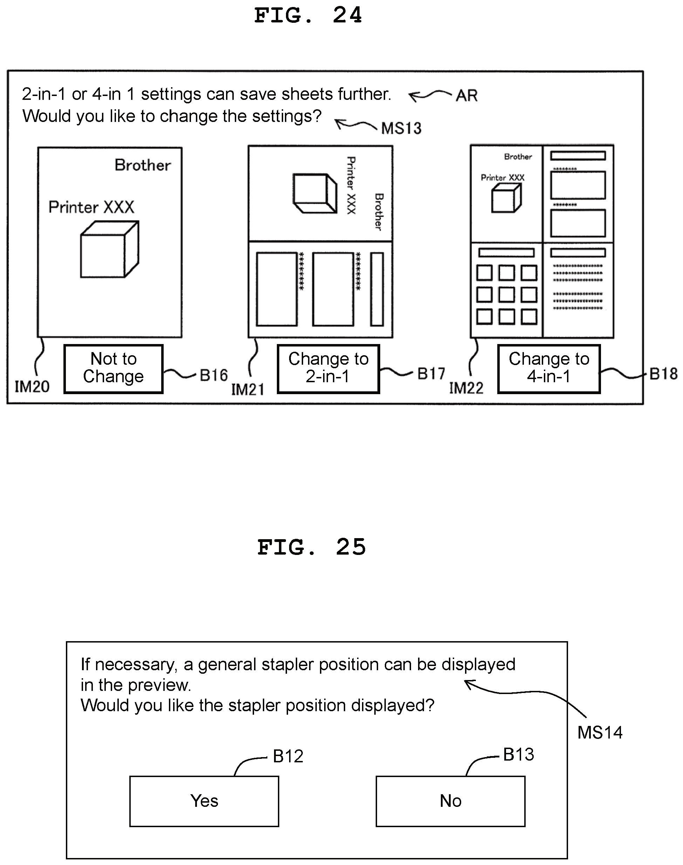

FIG. 24 is a diagram illustrating an example of a screen requesting the user to select the printing layout. The screen illustrated in FIG. 24 is displayed by the terminal device 300 in a case where the user presses the button B13 illustrated in FIG. 22, or in a case where the user presses either the button B14 or the button B15 illustrated in FIG. 23. As illustrated in FIG. 24, the terminal device 300 displays, in the display region AR of the screen, a message MS13 asking the user to perform printing with which one of the following layouts: 1-in-1, 2-in-1, or 4-in-1. The "2-in-1" refers to a layout setting in which two print images are printed on a single sheet. The "4-in-1" refers to a layout setting in which four print images are printed on a single sheet. Further, the terminal device 300 displays a print preview image IM20 for the "1-in-1", a print preview image IM21 for the "2-in-1", and a print preview image IM22 for the "4-in-1". The message MS13 and the print preview images IM21 and IM22 are examples of the recommendation information. The user can select the "1-in-1" by pressing the button B16, can select the "2-in-1" by pressing the button B17, and can select the "4-in-1" by pressing the button B18. FIG. 24 is an example of a case where, based on the image type and the number of output pages of the print image, print settings included in the print settings and relating to functions relating to the layout and the multiple-pages-per-sheet printing of the printer 200 are changed.

FIG. 25 is a diagram illustrating an example of a screen requesting the user to select whether to display a stapler position. The screen illustrated in FIG. 25 is displayed by the terminal device 300, regardless of which one of the above-described buttons illustrated in FIGs. 22, 23, and 24 is selected by the user. As illustrated in FIG. 25, the terminal device 300 displays a message MS14 asking the user whether to display the stapler position. The user can select to display the stapler position by pressing the button B12, and can select not to display the stapler position by pressing the button B13.

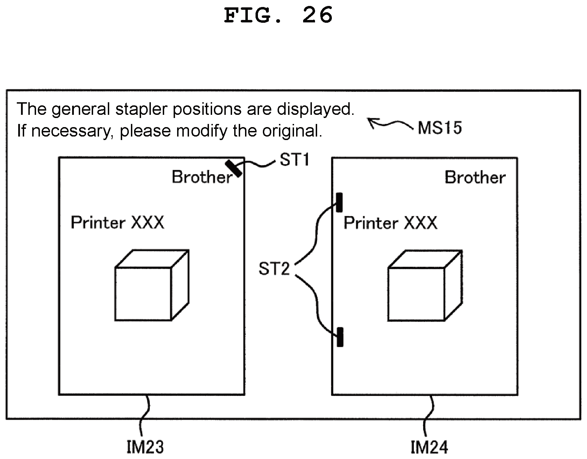

FIG. 26 is a diagram illustrating an example of a screen in a case where the user presses the button B12 illustrated in FIG. 25. As illustrated in FIG. 26, the terminal device 300 displays a message MS15 indicating that the stapler position is displayed, together with stapler positions of two general types. The terminal device 300 displays a print preview image IM23 illustrating a first stapler position ST1 and a print preview image IM24 illustrating a second stapler position ST2.

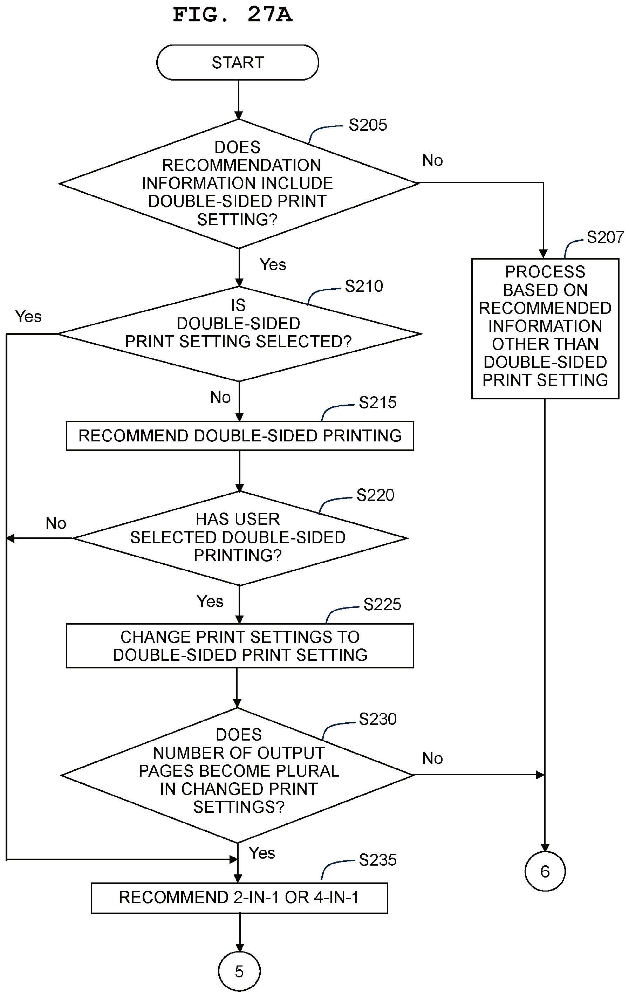

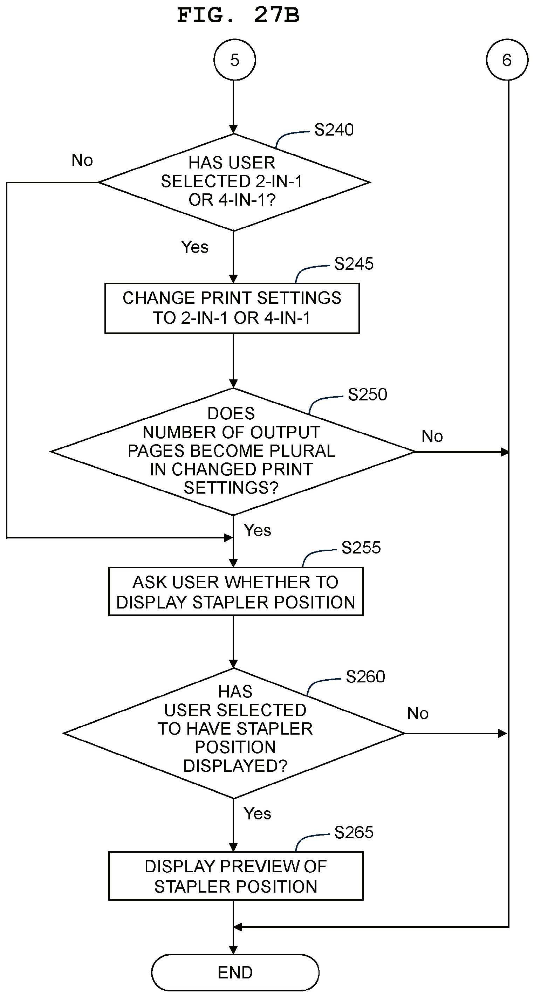

FIGs. 27A and 27B are a flowchart indicating a process performed by the terminal device 300 to perform the screen display illustrated in FIGs. 22 to 26. Note that the process illustrated in FIGs. 27A and 27B is an example of the detailed content of the processes in step S65 to step S70 illustrated in FIG. 6B.

As illustrated in FIG. 27A, the terminal device 300 determines, in step S205, whether the recommendation information received from the controller 150A includes the setting included in the print settings and relating to the double-sided printing (hereinafter referred to as "double-sided print setting"). In a case where the terminal device 300 determines that the double-sided print setting is not included in the recommendation information (step S205: NO), the terminal device 300 performs a process based on the recommendation information other than the double-sided print setting in step S207, then ends the process. On the other hand, in a case where the terminal device 300 determines that the double-sided print setting is included in the recommendation information (step S205: YES), the terminal device 300 proceeds with the next step S210.

In step S210, the terminal device 300 determines whether, in the current print settings relating to the print application program, the double-sided print setting is selected. In a case where the terminal device 300 determines that the double-sided print setting is selected (step S210: YES), the terminal device 300 proceeds with step S235 which will be described later. On the other hand, in a case where the terminal device 300 determines that the double-sided print setting is not selected (step S210: NO), the terminal device 300 proceeds with the next step S215.

In step S215, based on the recommendation information received from the controller 150A, the terminal device 300 causes the display part 330 to display a selection screen recommending changing the current print settings relating to the print application program such that the double-sided print setting is selected. The selection screen corresponds to the screen illustrated in FIG. 22.

In step S220, the terminal device 300 determines whether the user has selected, on the selection screen displayed in step S215, to change the current print settings such that the double-sided print setting is selected. In a case where the terminal device 300 determines that the user has not selected to change the current print settings such that the double-sided printing is selected (step S220: NO), the terminal device 300 proceeds with step S235 which will be described later. On the other hand, in a case where the terminal device 300 determines that the user has selected to change the current print settings such that the double-sided printing is selected (step S220: YES), the terminal device 300 proceeds with the next step S225.

In step S225, the terminal device 300 changes the print settings relating to the print application program such that the double-sided printing is selected.

In step S230, the terminal device 300 determines whether the number of output pages becomes plural, based on the output size of the print image and the print settings relating to the print application program which has been changed. In a case where the terminal device 300 determines that the number of output pages does not become plural (step S230: NO), the terminal device 300 ends the process. On the other hand, in a case where the terminal device 300 determines that the number of output pages becomes plural (step S230: YES), the terminal device 300 proceeds with the next step S235.

In step S235, based on the recommendation information received from the controller 150A, the terminal device 300 causes the display part 33 to display a selection screen recommending changing the current print settings relating to the print application program such that the multiple-pages-per-sheet printing (e.g., the "2-in-1" or "4-in-1") is selected. The selection screen corresponds to the screen illustrated in FIG. 24.

In step S240, the terminal device 300 determines whether the user has selected to change the print settings, on the selection screen displayed in step S215, such that the "2-in-1" or "4-in-1" is selected. In a case where the terminal device 300 determines that the user has not changed the print settings such that the "2-in-1" or "4-in-1" is selected (step S240: NO), the terminal device 300 proceeds with step S255 which will be described later. On the other hand, in a case where the terminal device 300 determines that the user has selected to change the print settings such that the "2-in-1" or "4-in-1" is selected (step S240: YES), the terminal device 300 proceeds with the next step S245.

In step S245, the terminal device 300 changes the print settings relating to the print application program such that the "2-in-1" or "4-in-1" is selected.

In step S250, the terminal device 300 determines whether the number of output pages becomes plural, based on the output size of the print image and the print settings relating to the print application program which have been changed. In a case where the terminal device 300 determines that the number of output pages does not become plural (step S250: NO), the terminal device 300 ends the process. On the other hand, in a case where the terminal device 300 determines that the number of output pages becomes plural (step S250: YES), the terminal device 300 proceeds with the next step S255.

In step S255, the terminal device 300 causes the display part 330 to display a selection screen asking the user whether to display the stapler position. This selection screen corresponds to the screen illustrated in FIG. 25.

In step S260, the terminal device 300 determines whether the user has selected to have the stapler position displayed on the selection screen displayed in step S255. In a case where the terminal device 300 determines that the user has not selected to have the stapler position displayed on the selection screen (step S260: NO), the terminal device 300 ends the process. On the other hand, in a case where the terminal device 300 determines that the user has selected to have the stapler position displayed on the selection screen (step S260: YES), the terminal device 300 proceeds with the next step S265.

In step S265, the terminal device 300 causes the display part 330 to display a print preview screen in which the stapler position is displayed. This print preview screen corresponds to the screen illustrated in FIG. 26. With this, the terminal device 300 ends the process.

Note that although an example in which print setting item(s), of the print settings, relating to the print image indicated below is (are) are recommended to be changed based on print image item(s) relating to the print image indicated below is described in the foregoing, the combination of the print setting item(s) and the print image item(s) is not limited to the combinations described below.
- Change the print settings such that the print setting item relating to the printing layout and the print setting item relating to the print area are changed based on the image type and output size of the print image.
- Change the print settings such that the print setting item relating to the printing layout is changed based on the image type and output size of the print image.
- Change the print settings such that the print setting item relating to the print area is changed based on the image type of the print image and the presence or absence of the specific information.
- Change the print settings such that the print setting item relating to the print colors is changed based on the image type and image usage of the print image.
- Change the print settings such that the print setting item relating to the print colors is changed based on the image type of the print image.
- Change the print settings such that the print setting item relating to the print image quality is changed based on the image type of the print image.
- Change the print settings such that the print setting item relating to the printer function is changed based on the image type and the number of output pages of the print image.
- Change the print settings such that the print setting item relating to the printing layout is changed based on the image type and the number of the output pages of the print image.

For example, based solely on the image type, the recommendation may be made such that at least one of the print setting item relating to the printing layout, the print setting item relating to the sheet type, the print setting item relating to the print color, the print setting item relating to the print image quality, the print setting item relating to the printer function, or the print setting item relating to the print area is changed. Alternatively, for example, the recommendation may be made such that at least one of the above-described print settings items is changed based on at least one of the output size, image usage, number of output pages, or presence or absence of the specific information, but not based on the image type. Specifically, for example, the recommendation may be made such that the print setting item relating to the sheet type is changed based on at least one of the output size, image usage, number of output pages, or presence or absence of the specific information. Alternatively, for example, the recommendation may be made such that the print setting item relating to the print color is changed based on at least one of the output size, number of output pages, or presence or absence of the specific information. Alternatively, for example, the recommendation may be made such that the print setting item relating to the print image quality is changed based on at least one of the output size, image usage, number of output pages, or presence or absence of the specific information. Alternatively, for example, the recommendation may be made such that the print setting item relating to the printer function is changed based on at least one of the output size, image usage, or presence or absence of the specific information. Alternatively, for example, the recommendation may be made such that the print setting item relating to the print area is changed based on the image usage or the number of output pages. Alternatively, for example, the recommendation may be made such that the print setting item relating to the printing layout or the print setting item relating to the print area is changed based on the image usage. In such a manner, the recommendation may be made such that at least one of the print setting item relating to the printing layout, the print setting item relating to the sheet type, the print setting item relating to the print color, the print setting item relating to the print image quality, the print setting item relating to the printer function, or the print setting item relating to the print area is changed based on at least one of the image type, output size, image usage, number of output pages of the print image, or presence or absence of the specific information relating to the print image.

### Storage of Printer Log Information

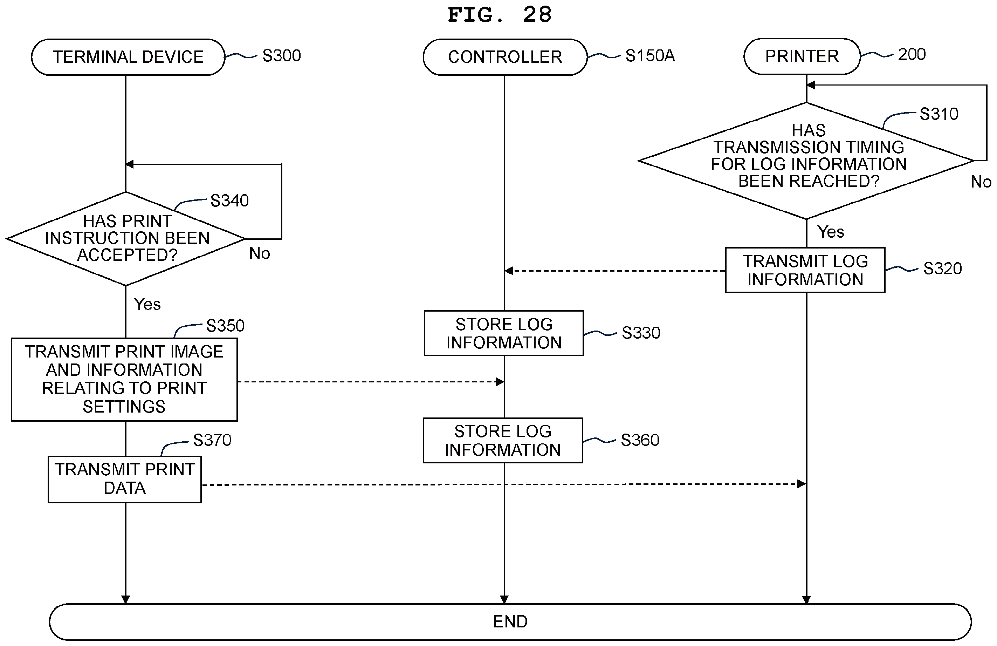

As described above, the controller 150A generates the third prompt which causes the artificial intelligence system 150B to infer the optimal print settings for the user, based on the print settings which is to be expected by the user and based on the operation history of the printer 200, and to produce a response including the optimal print settings. The controller 150A then transmits the generated third prompt and the log information, which relates to the operation history of the printer 200, to the artificial intelligence system 150B. The controller 150A obtains the log information relating to the printer 200 from either the printer 200 or the terminal device 300 and stores the log information relating to the printer 200. FIG. 28 is a sequence diagram illustrating a process performed by each of the terminal device 300, the controller 150A, and the printer 200, in a case where the controller 150A stores the log information relating to the printer 200.

As illustrated in FIG. 28, in step S310, the printer 200 determines whether a transmission timing for the log information has been reached. The log information includes, for example, the total power-on count, etc. In a case where the printer 200 is a multifunction peripheral including a scan function and a copy function, the log information may also include the total flatbed scan count for multi-page originals, etc. Scanning multi-page originals on the flatbed means repeatedly scanning an original including a plurality of sheets such that the original is scanned one sheet at a time while replacing each sheet on the flatbed. The transmission timing for the log information is, for example, a timing at which the printer 200 is powered on, or a predetermined time once a day, etc. The printer 200 repeats the process of step S310 until the printer 200 determines that the transmission timing has been reached (step S310: NO). In response to the printer 200 determining that the transmission timing has been reached (step S310: YES), the printer 200 proceeds with the next step S320.

In step S320, the printer 200 transmits the log information to the controller 150A.

In step S330, the controller 150A stores, for example, in the memory 115A, the log information received from the printer 200, such as the total power-on count, etc.

In step S340, the terminal device 300 determines whether the print instruction from the user has been accepted. The terminal device 300 repeats the process of step S340 until the terminal device 300 determines that the print instruction has been accepted (step S340: NO). In response to the terminal device 300 determining that the print instruction has been accepted (step S340: YES), the terminal device 300 proceeds with the next step S350.

In step S350, the terminal device 300 transmits, to the controller 150A, the print image and the information relating to the print settings which have been set by the user. Note that the print image may be the image data per se or, for example, data indicating the characteristics of the print image, such as the hash value, etc.

In step S360, the controller 150A receives the print image and the information relating to the print settings from the terminal device 300 and stores, for example, in the memory 115A, the print image and the information relating to the print settings, as the log information.

In step S370, the terminal device 300 transmits the print data to the printer 200.

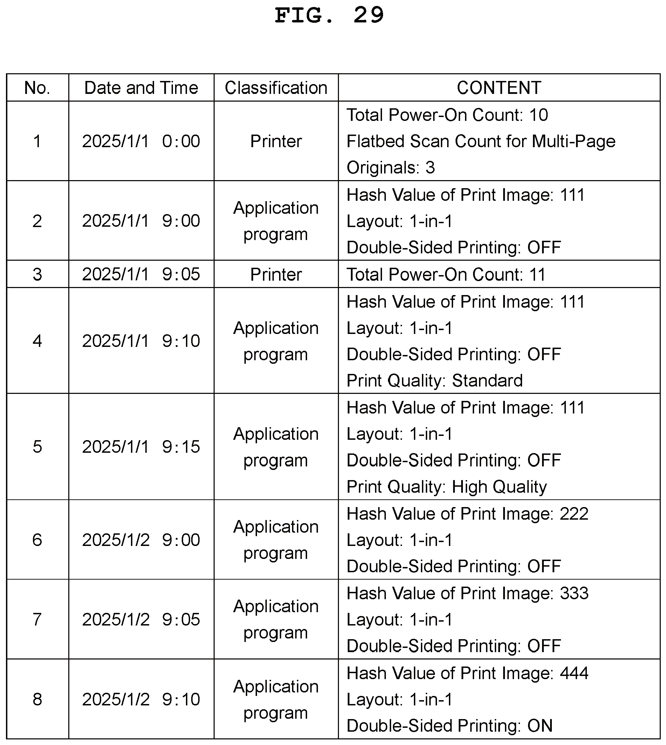

FIG. 29 is a diagram illustrating an example of the log information stored by the controller 150A through the process illustrated in FIG. 28. As illustrated in FIG. 29, the log information includes date and time of transmission, a classification indicating whether the log information has been transmitted from the printer 200 or the terminal device 300, and content of the information. In the example illustrated in FIG. 29, the log information includes the total power-on count of the printer 200 and the total flatbed scan count for multi-page originals. Further, the log information includes the hash value of the print image, and the information relating to the print settings such as the printing layout, the on or off status of the double-sided printing, the print image quality, etc.

Based on the third prompt, the artificial intelligence system 150B infers the optimal print settings for the user, based on the print settings to be expected by the user and the log information relating to the printer 200, and produces a response including the optimal print settings for the user. For example, in the log information illustrated in FIG. 29, the double-sided printing remains continuously off in item No. 2 and items No. 4 to No. 7. Accordingly, even in a case where the artificial intelligence system 150B infers, as the print settings to be expected by the user, the print settings in which the double-sided printing is on, the artificial intelligence system 150B may produce a response including the print settings in which the double-sided printing is off, prioritizing the tendency in the log information. Further, in the log information illustrated in FIG. 29, for example, the power is turned back on in item No. 3 immediately after printing has been performed as indicated in the item No. 2. Furthermore, the same print image has been repeatedly printed in the items No. 2, No. 4 and No. 5. Accordingly, the artificial intelligence system 150B may produce a response including the print settings which are changed such that the number of copies of a print target is specified, the print target being a single-page print target or a multi-page print target. Further, the artificial intelligence system 150B may also notify the user of a message asking the user whether unsatisfactory printing, such as smudging or misalignment, has occurred. Furthermore, for example, in the log information illustrated in FIG. 29, the same print image has been repeatedly printed in the items Nos. 4 and 5, whereas the image quality has been changed from the standard image quality in the item No. 4 to the high image quality in the item No. 5. Accordingly, the artificial intelligence system 150B may produce a response including the print settings which are changed such that the number of copies of the print target is specified. Moreover, the artificial intelligence system 150B may also notify the user of a message asking the user whether unsatisfactory printing, such as smudging or misalignment, has occurred. In a case where the user responds that the unsatisfactory printing has occurred, the artificial intelligence system 150B may notify the user of a message proposing maintenance or calibration.

Further, the artificial intelligence system 150B determines, based on the third prompt, whether the log information relating to the printer 200 satisfies a predetermined condition, and produces a response based on the results of the determination. The predetermined condition includes, for example, such a state where: printing having similar content as previously performed printing is (to be) performed in the print settings which are different from the print settings in the previously performed printing; the printer 200 is used in a non-recommended usage that might lead to malfunction; the total power-on count immediately after printing has increased by a specified number or more within a specified period, etc. Furthermore, in a case where the printer 200 includes an automatic document feeder (ADF) function, the predetermined condition may be such that flatbed scanning of a multi-page original has been performed a specified number of times or more within a specified period, etc. In a case where the artificial intelligence system 150B determines that the above-described predetermined condition is satisfied, for example, determines that printing having similar content as previously performed printing is (to be) performed in the print settings which are different from the print settings in the previously performed printing, the artificial intelligence system 150B may produce a response indicating, for example, that the print settings are changed to the settings in the previously performed print settings.

Moreover, based on the third prompt, the artificial intelligence system 150B compares the log information relating to the printer 200 with the specification information relating to the printer 200, and produces a response based on the results of the above-described comparison. The specification information includes, for example, information relating to recommended usage of the printer 200, such as not repeatedly turning the printer 200 on and off. In a case, for example, where the log information is inconsistent with the specification information relating to the printer 200, the artificial intelligence system 150B may produce a response including a warning to change the usage in conformity with the specification information.

### Effect of Embodiment

In the present embodiment, the image processing system 1 uses the artificial intelligence system 150B, which includes a general-purpose generative AI, to notify the user of the message relating to the printer 200. Therefore, the image processing system 1 according to the present embodiment is capable of notifying the user of the appropriate settings relating to the printer 200, via a message, without generating any trained model.

Further, in the present embodiment, the image processing system 1 includes the controller 150A configured to generate a prompt, to input the prompt to the artificial intelligence system 150B, and to receive the response (from the artificial intelligence system 150B). This realizes the image processing system 1 capable of automatically generating a prompt corresponding to a print image and causing the artificial intelligence system to perform the analysis of the print image.

Furthermore, in the present embodiment, the image processing system 1 causes the artificial intelligence system 150B to analyze the print image. Based on the analysis results, the controller 150A determines the recommendation information, which is the recommended print settings relating to the printing to be performed by the printer 200. With this, the user can be notified of the appropriate print settings relating to the print image, without generating the trained model.

Moreover, in the present embodiment, the image processing system 1 causes the artificial intelligence system 150B to analyze the image type of the print image and to produce a response including the analysis results. With this, the user can be notified of the print settings in accordance with the image type of the print image, via a message.

Further, in the present embodiment, the image processing system 1 causes the artificial intelligence system 150B to analyze the output size of the print image and to produce a response including the analysis results. With this, the user can be notified of the print settings in accordance with the output size of the print image, via a message.

Furthermore, in the present embodiment, the image processing system 1 causes the artificial intelligence system 150B to analyze the usage of the print image and to produce a response including the analysis results. With this, the user can be notified of the print settings in accordance with the usage of the print image, via a message.

Furthermore, in the present embodiment, the image processing system 1 causes the artificial intelligence system 150B to analyze the number of output pages of the print image and to produce a response including the analysis results. With this, the user can be notified of the print settings in accordance with the number of output pages of the print image, via a message.

Moreover, in the present embodiment, the image processing system 1 causes the artificial intelligence system 150B to analyze whether the print image includes the specific information and to produce a response including the analysis results. With this, the user can be notified of the print settings in accordance with the specific information included in the print image, via a message.

Further, in the present embodiment, the image processing system 1 causes the artificial intelligence system 150B to analyze the print image. Based on the response including the analysis results from the artificial intelligence system 150B, the controller 150A determines the recommendation information relating to the layout in the printing process. With this, the user can be notified of the print settings relating to a suitable layout with respect to the print image, via a message.

Furthermore, in the present embodiment, the controller 150A determines the recommendation information relating to the sheet in the printing process, in accordance with the response including the analysis results from the artificial intelligence system 150B. With this, the user can be notified of the print settings relating to a suitable sheet with respect to the print image, via the message.

Moreover, in the present embodiment, the image processing system 1 causes the artificial intelligence system 150B to analyze the print image. In accordance with the response including the analysis results from the artificial intelligence system 150B, the controller 150A determines the recommendation information relating to the color in the printing process. With this, the user can be notified of the print settings relating to the suitable colors in the printing process with respect to the print image, via a message.

Further, in the present embodiment, the image processing system 1 causes the artificial intelligence system 150B to analyze the print image. In accordance with the response including the analysis results from the artificial intelligence system 150B, the controller 150A determines the recommendation information relating to the image quality in the printing process. With this, the user can be notified of the print settings relating to the suitable image quality in the printing process with respect to the print image, via a message.

Furthermore, in the present embodiment, the image processing system 1 causes the artificial intelligence system 150B to analyze the print image. In accordance with the response including the analysis results from the artificial intelligence system 150B, the controller 150A determines the recommendation information relating to the print function of the printer 200. With this, the user can be notified of the print settings relating to the suitable print function of the printer 200 with respect to the print image, via a message.

Moreover, in the present embodiment, the image processing system 1 causes the artificial intelligence system 150B to analyze the print image. In accordance with the response including the analysis results from the artificial intelligence system 150B, the controller 150A determines the recommendation information relating to the print area in the printing process. With this, the user can be notified of the print settings relating to the suitable print area with respect to the print image, via a message.

Further, in the present embodiment, the image processing system 1 causes the artificial intelligence system 150B to compare the print settings to be expected by the user with the operation history of the printer 200. Based on the comparison results, the controller 150A determines the recommendation information relating to the printer 200. With this, the user can be notified of the appropriate print settings relating to the printing process with respect to the print image selected by the user, without generating the trained model.

Furthermore, in the present embodiment, the image processing system 1 queries the artificial intelligence system 150B whether the operation history of the printer 200 satisfies the predetermined condition. Based on the content of the response from the artificial intelligence system 150B, the controller 150A determines the recommendation information relating to the printer 200. With this, the user can be notified of the appropriate print settings relating to the printing process with respect to the print image selected by the user, without generation of the trained model.

Moreover, in the present embodiment, the image processing system 1 causes the artificial intelligence system 150B to compare the operation history of the printer 200 with the specification information relating to the printer 200. Based on the comparison results, the controller 150A determines the warning content relating to the printer 200. With this, the user can be notified of the appropriate print settings relating to the printing process with respect to the print image selected by the user, without generation of the trained model. Further, in a case where an operation not in conformity with the specification information is being performed, the user can be notified of a warning message and to be alerted.

Further, in the present embodiment, the image processing system 1 issues instructions using the prompts to the artificial intelligence system 150B, which includes the general-purpose generative AI, in multiple stages. The generation of the second prompt is based on the results of the response from the artificial intelligence system 150B to the first prompt. Furthermore, the generation of the third prompt is based on the results of the response from the artificial intelligence system 150B to the second prompt. With this, the user can be notified of the appropriate print settings relating to the printer 200.

Furthermore, in the present embodiment, the terminal device 300 displays the message relating to the recommendation information on the screen which is configured to accept the print settings relating to the printer 200 and the selection of the print image. With this, the user can be notified of a message relating to the print settings effectively.

### Modifications

The present disclosure is not limited to the embodiment described above, and various changes are possible within the scope that does not depart from the spirit and technical concept of the present disclosure.

For example, the content of the present disclosure is applicable in a case where the user operates the printer 200 directly to perform printing, without using the terminal device 300. A specific example of this modification will be described below.

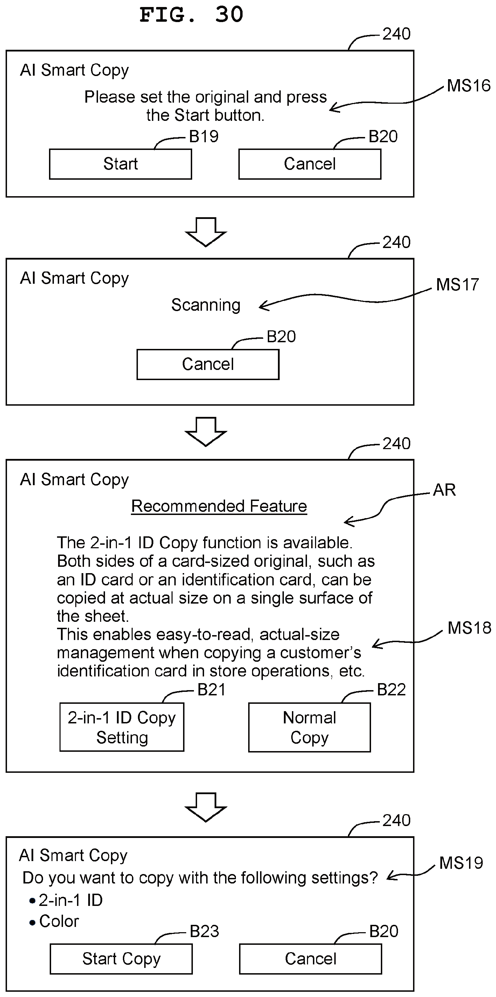

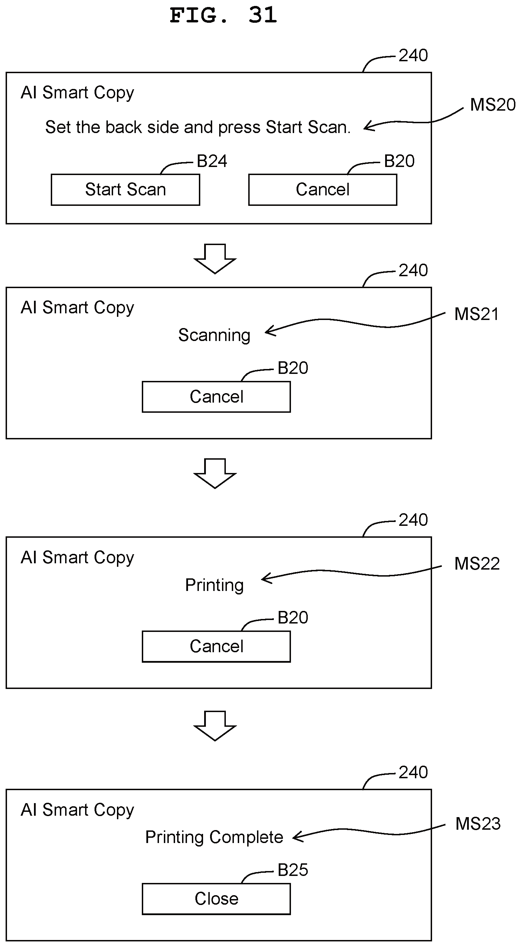

FIGs. 30 and 31 are diagrams each illustrating an example of a screen on which the printer 200 causes the display part 240 to display recommendation information, in a case where the user operates the printer 200 directly to perform printing. Note that FIGs. 30 and 31 illustrate an example wherein the printer 200 is a multifunction peripheral including the scan and copy functions, and wherein a card having information on both sides is to be copied. The card is, for example, a card-sized identification such as a driver's license, an ID card, a business card, etc. In the example illustrated in FIGs. 30 and 31, the printer 200 displays text "AI Smart Copy" representing the copy function which uses the artificial intelligence system 150B so as to present the recommendation information.

As illustrated in FIG. 30, the printer 200 causes the display part 240 to display a message MS16 prompting the user to set an original to be copied and perform copying. The user can select to perform copying by pressing a button B19, and can select to cancel copying by pressing a button B20. For example, in response to the user setting the front side of the card and pressing the button B19, the printer 200 performs scanning of the front side of the card. In this situation, the printer 200 causes the display part 240 to display a message MS17 notifying that scanning is in progress and the button B20 which is a cancel button.

Next, the printer 200 causes the display part 240 to display a message MS18 in the display region AR of the display part 240, the message MS18 asking the user whether to perform a 2-in-1 ID copy. The 2-in-1 ID copy is a function which scans both the front side and the back side of the card and prints both the front side and the back side, each at actual size, on one side of a sheet. The message MS18 is an example of the recommendation information. The user can select to change copy settings such that a setting included in the copy settings and relating to the 2-in-1 ID copy is selected, by pressing a button B21, and the user can select not to change the copy settings, by pressing a button B22. That is, each of the buttons B21 and B22 accepts the input from the user to select the operating condition relating to the printing process to be performed by the printer 200. The buttons B21 and B22 are examples of the acceptance region.

In response to the user pressing the button B21, the printer 200 causes the display part 240 to display a message MS19 asking the user whether to perform the copying in the copy settings in which copy settings relating to the 2-in-1 ID copy and color copy are selected. The user can select the copy settings relating to the 2-in-1 ID copy and color copy, by pressing a button 23, and can cancel the copying by pressing the button B20.

In response to the user pressing the button B23, the printer 200 causes the display part 240 to display a message MS20 prompting the user to set the back side of the card and perform the scanning, as illustrated in FIG. 31. The user can select to perform the scanning by pressing a button B24, and can select to cancel the scanning by pressing the button B20. In response to the user setting the back side of the card and pressing the button B24, the printer 200 performs the scanning of the back side of the card. In this situation, the printer 200 causes the display part 240 to display a message MS21 notifying that scanning is in progress, and the button B20.

Then, the printer 200 prints both the front side and the back side of the card, each at the actual size, on one side of the sheet. In this situation, the printer 200 causes the display part 240 to display a message MS22 notifying that the printing is in progress, and the button B20. Upon completing the printing, the printer 200 causes the display part 240 to display a message MS23 indicating that the printing is completed and a button B25 which is a close button. The user can by pressing the button B25 to thereby close the screen and complete the copying. FIGs. 29 and 30 illustrate an example of a case where the print setting included in the print settings and relating to the layout and the print setting included in the print settings and relating to the multiple-pages-per-sheet printing function of the printer 200 are changed based on the image type of the print image.

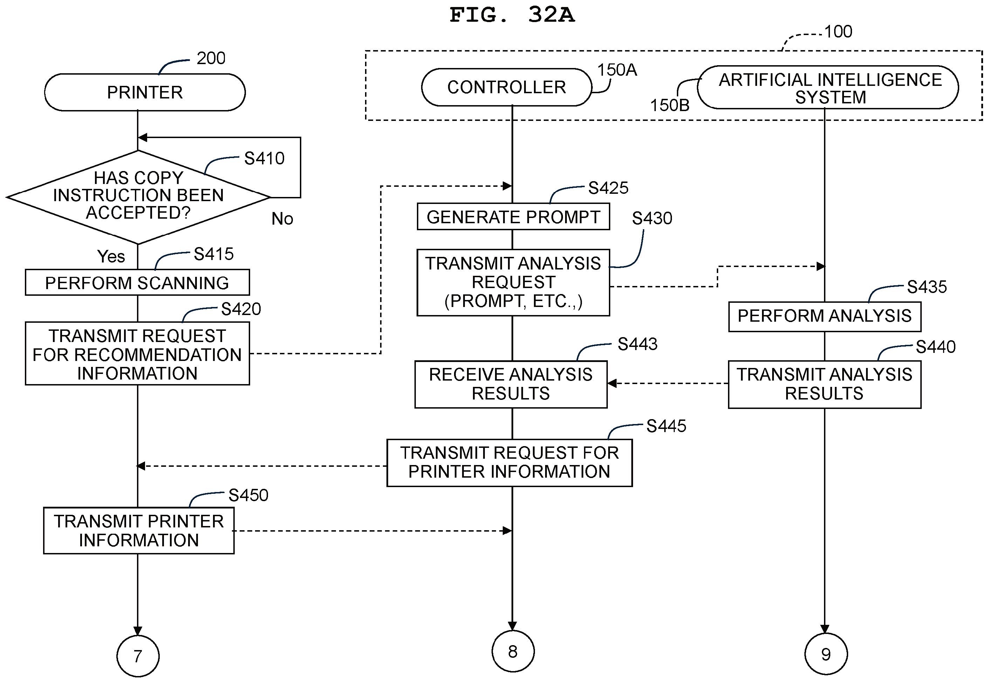

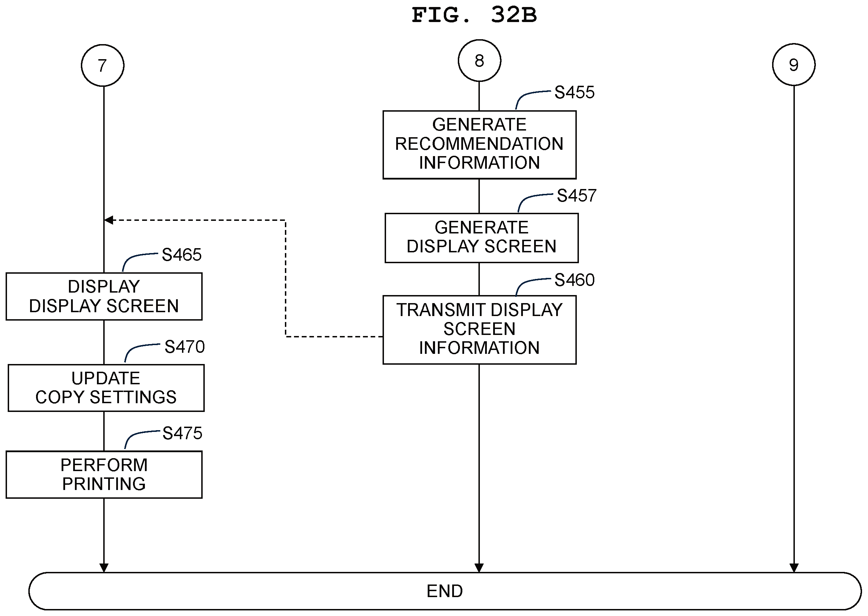

FIGs. 32A and 32B are a sequence diagram illustrating a process performed by each of the printer 200, the controller 150A, and the artificial intelligence system 150B, so as to perform the screen display illustrated in FIGs. 30 and 31.

In step S410, the printer 200 determines whether a copy instruction from the user to perform copying has been accepted. The printer 200 repeats the process of step S410 until the printer 200 determines that the copy instruction has been accepted (step S 410: NO). In a case where the printer 200 determines that the copy instruction has been accepted (step S410: YES), the printer 200 proceeds with the next step S415. The copy instruction is an example of an input relating to the image processing from the user. The controller 210, of the printer 200, which performs a process corresponding to the Yes determination in step S410, is an example of the acceptance part. Further, the controller 210, of the printer 200, is an example of the computer, and the process performed in step S410 is an example of the acceptance process and the acceptance step.

In step S415, the printer 200 performs scanning of the original as a copy target to be copied.

In step S420, the printer 200 transmits a request for the recommendation information to the controller 150A. The request for the recommendation information includes the printer ID of the printer 200, the scanned image, the current print settings, etc. Note that the scanned image may be the image data per se or the link information to the image data, etc. The link information is, for example, a URL indicating the storage location of the image data, etc.

In step S425, the controller 150A receives the request for the recommendation information from the printer 200. In step S425, the controller 150A generates a prompt, in accordance with the input received in the printer 200, the prompt relating to the printing process to be performed by the printer 200. The controller 150A generates a prompt which causes the artificial intelligence system 150B to produce a response including the analysis results of the scanned image included in the request for recommendation information. The processor 110A, of the controller 150A, performing this step S425 is an example of the prompt generation part. Further, the processor 110A, of the controller 150A, is an example of the computer, and the process performed in step S425 is an example of the prompt generation process and the prompt generation step.

In step S430, the controller 150A transmits an analysis request to the artificial intelligence system 150B. The analysis request includes the prompt generated in step S425 and the scanned image, etc. The analysis request may also include, as necessary, the operation history of the printing process in the printer 200, the specification information relating to the printer 200, etc.

In step S435, the artificial intelligence system 150B performs the analysis in accordance with the analysis request received from the controller 150A. The artificial intelligence system 150B performs the analysis based on the prompt included in the analysis request.

In step S440, the artificial intelligence system 150B transmits the analysis results to the controller 150A.

In step S443, the controller 150A receives the analysis results from the artificial intelligence system 150B. The processor 110A, of the controller 150A, which performs the process in step S430 and the process in this step S443, is an example of the interface part. Furthermore, the process performed in step S430 and the process performed in this step S443 are examples of the response reception process and the response reception step.

In step S445, the controller 150A transmits a request for printer information to the printer 200, based on the printer ID received in step S425.

In step S450, the printer 200 transmits the printer information to the controller 150A, in accordance with the request for printer information received from the controller 150A.

In step S455, based on the analysis results from the artificial intelligence system 150B and the printer information, the controller 150A determines the copy settings to be recommended for the copying process by the printer 200, and generates the recommendation information. The recommendation information is an example of a recommended operating condition to be recommended for the copying process by the printer 200. The processor 110A, of the controller 150A, which performs the process in this step S455, is an example of the condition determination part.

Alternatively, in step S455, the controller 150A determines the warning content relating to the printer 200, based on the response, from the artificial intelligence system 150B, which includes the comparison results between the operation history of the printer 200 and the specification information relating to the printer 200, and the controller 150A generates the warning information. The processor 110A, of the controller 150A, performing the process in this step S455 is an example of the warning determination part.

In step S457, the controller 150A generates a display screen via which the printer 200 notifies the user of the generated recommendation information or the warning information.

In step S460, the controller 150A transmits, to the printer 200, display screen information relating to the display screen generated in step S457.

In step S465, based on the display screen information received from the controller 150A, the printer 200 causes the display part 240 to display the display screen including a message relating to the recommended copy settings. Further, based on the warning information received from the controller 150A, the terminal device 300 causes the display part 240 to display a display screen including the message relating to the warning content. The controller 210, of the printer 200, performing the process in this step S465 is an example of the notification part. Further, the process performed in step S465 is an example of the notification process and the notification step.

In step S470, the printer 200 updates the copy settings. The printer 200 updates the copy settings based on the content of the input performed by the user via the operation part 250 in accordance with the message displayed on the display part 240 in step S465. Although not illustrated in the drawings, the screen displayed on the display part 240 includes an acceptance region via which the input performed by the user is accepted, and a display region in which the message is displayed.

In step S475, the printer 200 performs the printing of the scanned image, based on the copy settings updated in step S470.

The modification described above is also capable of realizing the same effect as realized in the above-described embodiment.

Note that, for example, the terminal device 300 may incorporate an application program corresponding to the function of the controller 150A, and the general-purpose generative AI, etc., such that the terminal device 300 is capable of performing the processes not via the service server 100. In this case, the functions of the controller 150A and the artificial intelligence system 150B, etc., can be incorporated into the terminal device 300.

Further, in the above-described embodiment, the controller 150A generates the recommendation information based on the response generated by the artificial intelligence system 150B and the printer information directly obtained from the printer 200 based on the printer ID. However, the present disclosure is not limited to the above-described configuration. For example, the controller 150A may output the prompt, together with the printer ID, to the artificial intelligence system 150B, and cause the artificial intelligence system 150B to generate the recommendation information.

Furthermore, in the above-described embodiment, the case where the output process of the image is the printing process performed by the printer 200. The present disclosure, however, is not limited to this. For example, in a case where the image processing apparatus is a display device such as a display, etc., the output process may be a displaying process. Moreover, for example, in a case where the image processing apparatus is a multifunction peripheral including the fax function, etc., the output process may be a fax operation.

Further, the sequence diagrams illustrated in FIGs. 6, 7, 27, 28 and 32 do not limit the present disclosure to the procedures illustrated in the sequence diagrams. A procedure may be added, or deleted, with respect to the procedures described in the present embodiment, within the range not departing from the spirit and the technical concept of the present disclosure, and the order of the procedures described in the present embodiment may be changed, etc., within the range not departing from the spirit and the technical concept of the present disclosure.

Furthermore, in addition to the description in the foregoing, the technique, procedure, method, etc., based on the embodiment and each of the modifications may be appropriately combined and used.

Furthermore, although specific examples are not given, the present disclosure may be implemented with various modifications within the scope not departing from the spirit of the present disclosure.

## Claims

1. An image processing system comprising:
a setting part configured to set an image processing apparatus as a transmission destination for an instruction to perform image processing from a user;
an acceptance part configured to accept an input from the user, the input relating to the image processing with respect to the image processing apparatus set by the setting part; and
a notification part configured to notify a message based on a response which is obtained by a prompt generation part and an interface part, the prompt generation part being configured to generate a prompt in accordance with the input accepted by the acceptance part, the prompt relating to the image processing to be performed by the image processing apparatus set by the setting part, the interface part being configured to input the prompt generated by the prompt generation part to an artificial intelligence system including a general-purpose generative Al, and to receive the response.

2. The image processing system according to claim 1, further comprising the prompt generation part and the interface part.

3. The image processing system according to claim 2, wherein
the input includes an image to be processed through the image processing,
the prompt generation part is configured to generate the prompt which causes the artificial intelligence system to produce the response including analysis results of the image,
the image processing system further comprises a condition determination part configured to determine, based on the response, a recommended operating condition to be recommended for the image processing by the image processing apparatus set by the setting part, and
the notification part is configured to notify, as the message, the recommended operating condition determined by the condition determination part based on the response.

4. The image processing system according to claim 2 or 3, wherein the prompt generation part is configured to generate the prompt which causes the artificial intelligence system to produce the response further including one or more of: a type of the image, an output size of the image, a usage of the image, the number of output pages of the image.

5. The image processing system according to claim 2, 3 or 4, wherein the prompt generation part is configured to generate the prompt which causes the artificial intelligence system to produce the response indicating whether content of the image includes predetermined specific information.

6. The image processing system according to any one of claims 2 to 5, wherein
the image processing apparatus is configured to perform an output process for outputting the image, as the image processing, and
the condition determination part is configured to determine, based on the response, a first recommended operating condition relating to a layout in the output process.

7. The image processing system according to claim 6, wherein
the image processing apparatus is configured to perform a printing process for printing the image on a sheet, as the output process; and
the condition determination part is configured to determine the first recommended operating condition relating to the sheet.

8. The image processing system according to any one of claims 2 to 7, wherein the condition determination part is configured to determine, based on the response, one or more of: a second recommended operating condition relating to a color in the image processing, a third recommended operating condition relating to an image quality in the image processing, a fourth recommended operating condition relating to a function of the image processing, a fifth recommended operating condition relating to an image area in the image processing.

9. The image processing system according to any of claims 2 to 8, wherein
the input includes an expected operating condition relating to the image processing,
the prompt generation part is configured to generate the prompt which causes the artificial intelligence system to produce the response further including results of a comparison between the expected operating condition and an operation history of the image processing apparatus set by the setting part,
the image processing system further comprises a condition determination part configured to determine, based on the response, a recommended operating condition to be recommended for the image processing by the image processing apparatus set by the setting part, and
the notification part is configured to notify, as the message, the recommended operating condition determined by the condition determination part.

10. The image processing system according to any of claims 2 to 9, wherein
the input includes an operation history of the image processing apparatus set by the setting part,
the prompt generation part is configured to generate the prompt which causes the artificial intelligence system to produce the response indicating whether the operation history satisfies a predetermined condition,
the image processing system further comprises a condition determination part configured to determine, based on the response, a recommended operating condition to be recommended for the image processing by the image processing apparatus set by the setting part, and
the notification part is configured to notify, as the message, the recommended operating condition determined by the condition determination part.

11. The image processing system according to any of claims 2 to 10, wherein
the prompt generation part is configured to generate the prompt which causes the artificial intelligence system to produce the response including results of a comparison between an operation history of the image processing apparatus set by the setting part and specification information relating to the image processing apparatus set by the setting part,
the image processing system further comprises a warning determination part configured to determine, based on the response, content of a warning relating to the image processing apparatus set by the setting part, and
the notification part is configured to notify, as the message, the content of the warning determined by the warning determination part.

12. The image processing system according to any of claims 2 to 11, further comprising a memory configured to store a plurality of forms of the prompt, wherein
the prompt generation part is configured to select, based on results of a response produced by the artificial intelligence system including the general-purpose generative AI in accordance with a first prompt, a prompt form of a plurality of prompt forms stored in the memory, and to generate a second prompt based on the selected prompt form, and
the interface part is configured to input the second prompt generated by the prompt generation part to the artificial intelligence system and to receive the response.

13. The image processing system according to any of claims 1 to 12, further comprising a display part configured to cause a display device to display a screen,
wherein the screen includes: an acceptance region configured to accept, from the user, either an input to select an operating condition relating to the image processing to be performed by the image processing apparatus set by the setting part, or an input to select an image to be processed through the image processing; and a display region configured to display the message notified by the notification part.

14. An image processing program causing a computer to perform:
a setting process for setting an image processing apparatus as a transmission destination for an instruction to perform image processing from a user;
an accepting process for accepting an input from the user, the input relating to the image processing with respect to the image processing apparatus set through the setting process; and
a notification process for notifying a message based on a response which is obtained through a prompt generation process and a response reception process, the prompt generation process being a process for generating a prompt in accordance with the input accepted through the accepting process, the prompt relating to the image processing to be performed by the image processing apparatus set through the setting process, the response reception process being a process for inputting the prompt generated through the prompt generation process to an artificial intelligence system including a general-purpose generative AI, and for receiving the response.

15. An image processing method executable by an image processing system, the method comprising:
a setting step of setting an image processing apparatus as a transmission destination for an instruction to perform image processing from a user;
an accepting step of accepting an input from the user, the input relating to the image processing with respect to the image processing apparatus set through the setting step; and
a notification step of notifying a message based on a response which is obtained through a prompt generation step and a response reception step, the prompt generation step being a step of generating a prompt in accordance with the input accepted through the accepting step, the prompt relating to the image processing to be performed by the image processing apparatus set through the setting step, the response reception step being a step of inputting the prompt generated through the prompt generation step to an artificial intelligence system including a general-purpose generative AI, and of receiving the response.
